# NEW EUROPEAN PATENT SPECIFICATION

(11) **EP 3 283 569 B2**
(45) Date of publication and mention of the opposition decision: **31.07.2024**
(45) Mention of the grant of the patent: 09.12.2020
(21) Application number: 16717353.3
(22) Date of filing: 16.04.2016
(51) Int. Cl.: C08L 33/00, C09D 133/00

(54) **AQUEOUS DISPERSION AND USES THEREOF**
WÄSSRIGE DISPERSION UND VERWENDUNGEN DAVON
DISPERSION AQUEUSE ET UTILISATIONS ASSOCIÉES

(30) Priority: 17.04.2015 EP 15164143; 07.07.2015 EP 15175579
(43) Date of publication of application: 21.02.2018
(73) Proprietor: Covestro (Netherlands) B.V., 6167 RD Geleen (NL)
(72) Inventor: VAN GEEL, Adrianus Antonius Johannes, 6100 AA Echt (NL); SUYKERBUYK, Franciscus Adrianus Johannes, 6100 AA Echt (NL); SATGURUNATHAN, Rajasingham, 6100 AA Echt (NL); OVERBEEK, Gerardus Cornelis, 6100 AA Echt (NL); VAN HILST, Johannes, 6100 AA Echt (NL)
(74) Representative: Levpat
(86) International application number: PCT/EP2016/058473
(87) International publication number: WO 2016/166358

(56) References cited:
- WO-A1-2013/021234
- US-A1- 2010 048 769

## Description

The present invention relates to the field of coating compositions such as paints and inks. It especially relates to compositions which produce coatings that have a high matt (i.e. low gloss) finish and optionally which also have good haptic properties (i.e. good hand feel, such as for example soft feel, velvet feel, cold/warm feel and peach feel).

Coating compositions with a matt finish are desired for aesthetic and other reasons. The most common method to reduce the gloss of a coating is to add matting agents such as powders and liquid polyethylene waxes.

However generally it has been found that such additives can only be added in very low amounts typically up to a maximum of 5% by total weight of the composition in order to not have significant adverse effects on other properties of the coating. Adding matting agents in an amount a lot less than 5% w/w can still reduce the performance of the coating.

There are also other disadvantages in using matting agents especially when in powder form. Matting powders are first ground into a pigment paste before being added to a coating composition and this is labour and energy intensive. Matting powders have a large surface area and contain a large proportion of dust-forming small particles that may create exposure and explosion hazards. To obtain a matt finish the viscosity of the composition must be repeatedly adjusted as the pigment paste is added and this further step is also labour intensive. The large surface area makes the matting powder difficult to disperse homogenously and there is a tendency for the matting powder to migrate to the coating surface after application. If the coating is damaged or abraded, this can remove matting powder increasing surface gloss.

Similar problems exist when using liquid wax matting agents which also tend to migrate to the coating surface. Typical liquid wax matting agents are hydrophobic. This creates a further problem of making the coating less compatible with other ingredients especially where the wax migrates to the surface. This makes subsequent recoating more difficult.

Further, prior art exists in which polymer beads are used in coating compositions to provide a matt coating. For example US6649687 (Sherwin Williams) describes a coating composition that produces a chemically resistant coating of low reflectance that is reducible in water. The coating composition comprises water dispersible polyurethane, cross-linker and a mixture of polymer beads. The bead mixture comprises polyolefin beads of mean particle size from 5 to 40 microns and poly urea beads of mean particle size of less than 15 microns. The bead mixture is added in an amount sufficient to provide a matt coating.

CA 2197843 (Atofina) describes in a first step, suspension polymerisation of acrylic monomers in the presence of bi-functional cross-linking monomers to prepare cross-linked acrylic micro-beads of 10 to 40 micron size. In a second step a final polymer is prepared by suspension polymerisation of further acrylic monomer without any cross-linker. The second step is carried out in the presence of the dispersed micro-beads from the first step in an amount of from 3 to 40% by weight of the final polymer.

Further, Arkema provides 20-50µm dry polymethylmethacrylate (p-MMA) beads under the trade name Altuglas BS for various applications including as a matting additive. These beads are also described in the examples of EP1022115. Microbeads AS provides mono-sized thermoset dry p-MMA beads as products in various sizes (such as 6, 8, 10 or 15 µm) for use as matting additives. These products are produced by a particle growth method as described by Ugelstad.

Beads are dust-forming small particles and hence when applied as matting agents, they have the disadvantages as described above, i.e. danger for explosion, difficult to disperse homogeneously in a liquid coating composition, potentially resulting in agglomeration of particles and consequently in settling of the particles in the coating composition, loss of integrity of the film coating and/or sand paper feel of the film coating.

US2007/0218291 of Rohm and Haas describes aqueous matt coating compositions comprising a binder and a polymeric duller bead prepared by emulsion polymerization in water and composed of particles having an average diameter of 1-20 microns and preferably being one or more multi-stage copolymer. The disadvantage of the multi-stage copolymer duller particles is that the process to prepare these particles is a multi-step growth process and hence time consuming and economical less attractive.

The object of the present invention is to provide an aqueous dispersion of polymeric matting particles which can be prepared in a single stage process , which aqueous dispersion is storage stable under standard conditions for at least one week, which can be easily homogeneously dispersed in an aqueous coating composition of a latex polymer and which can be used to reduce the gloss (and optional also to obtain haptic properties) of such aqueous coating compositions.

The object has surprisingly been achieved by providing aqueous dispersions of certain vinyl polymer particles prepared by free radical suspension polymerisation and selection of appropriate combinations of kind of stabilizer and stabilizer concentration. Such dispersions can be used as matting agent for preparing matt coatings, and thus they can be used instead of the conventional matting agents or they can partly replace the conventional matting agents. Applying an aqueous dispersion as matting agent for aqueous coating compositions compared to dry particles is advantageous since dispersed particles are more easily to disperse homogeneously than dry particles. Furthermore, the matting agents as well as the aqueous coating composition containing the matting agents according to the present invention are storage stable for at least one week under standard conditions (contrary to aqueous dispersions obtained by suspension polymerisation but not according to the present invention), thus there is no need to remove water from the aqueous dispersions for storage purposes and the aqueous dispersion of the present invention can be mixed with aqueous dispersions of latex polymers without additional handling steps.

Typically a suspension polymer has a particle size from 50 up to 1500 microns and is dried to free flowing particle product because the suspension slurry is not storage stable because of the high particle size. The applicant has developed a suspension polymerisation process that surprisingly results in aqueous dispersions with long storage stability containing dispersed polymer particles of small particle size (i.e. having a volume average particle size diameter (D50) of from 1 to 30 µm (microns) and a particle size distribution of at most 2) which can produce coatings with good matt and optionally good haptic properties. Such water borne dispersion are very different from conventional products for matt finishes from companies such as Lucite, Arkema and Microbeads as these prior art products are typically prepared as dry beads. Particles obtained according to the invention have very different properties compared to dry beads matting additives as described above, in particular with respect to handing of the matting additive and homogeneity of the matting additive in the liquid coating composition. Further, the permitted T_{g} of dry beads is limited as dry beads having a T_{g} less than about 30 to 40°C are no longer storage stable (i.e. not free flowing anymore due to fusing of the beads). Dry beads are in general prepared by first preparing an aqueous dispersion of polymer particles by suspension polymerization and then taking off the water from the aqueous dispersion to obtain dry beads. Aqueous dispersions of polymer particles prepared by suspension polymerization can be prepared from polymers having a wide range of T_{g} (glass transition temperature) values, but when T_{g} is too low the particles agglomerate as soon as you take off the water. As such, the permitted T_{g} of dry beads is limited as dry beads having a T_{g} less than about 30 to 40°C are no longer storage stable.

It has surprisingly been found that selection of appropriate combinations of kind of stabilizer and stabilizer concentration and kind of initiator can allow a suspension polymerization to produce storage stable aqueous dispersions having particles having volume average particle size diameter (D50) from 1 micron to 30 microns, for example from 2 microns to 20 microns, and a particle size distribution of at most 2. These low average particle sizes can even be obtained when using an agitator speed with a maximum value lower than 1000 rpm and even lower than 750 rpm.

This object has surprisingly been achieved by providing an aqueous dispersion obtained by suspension polymerisation of vinyl monomers in the presence of an oil-soluble organic initiator and a partially hydrolysed vinyl acetate (co)polymer, comprising
(i) dispersed particles of vinyl polymer having a volume average particle size diameter (D50) of from 1 to 30 µm (microns) and a particle size distribution of at most 2;
(ii) a partially hydrolysed vinyl acetate (co)polymer in an amount of from 2% to 30% by weight, relative to the total amount of monomers used to prepare the vinyl polymer(s) of the dispersed polymeric particles; and
(iii) decomposition products of the oil-soluble organic initiator,
wherein at least 95 wt.% of the partially hydrolysed vinyl acetate (co)polymer that is present in the aqueous dispersion has a weight average molecular weight M_{w} from 25 to 500 kDalton and a hydrolysis degree of from 70 to 95 mol%, and wherein the oil-soluble initiator has a water solubility of at most 1 g per l water at 20°C and wherein the oil-soluble organic initiator is di-lauroyl peroxide.

Surprisingly the applicant has found that the aqueous dispersion of the present invention are storage stable and can very suitably be used as matting agents for aqueous coating compositions (in particular when containing acrylic and/or urethane latex polymers) and optionally also improved haptic properties of the coating can be obtained. An additional advantage is that other relevant coating properties (i.e. chemical resistance and/or blocking resistance) remain on a level required for coating applications.

WO2013/021234 discloses aqueous vinyl ester/ethylene copolymer dispersions for use in adhesives which are prepared by emulsion copolymerization of a monomer mixture comprising a vinyl ester, ethylene, a stabilizing system comprising polyvinyl alcohol having a degree of hydrolysis of at least 97 mol% and a selected type of free radical redox polymerisation system, i.e. a water-insoluble oxidizing agent having a water-solubility of less than 20% by weight in water at 25 °C and a sulfinic acid-based reducing agent. In the examples according to the claimed invention tert.butyl hydroperoxide is used as water-insoluble oxidizing agent. Preferably, a second polyvinyl alcohol having a hydrolysis degree of from 85 to 95 mol% is also applied.

As used herein, a storage stable dispersion means a dispersion that is storage stable under standard conditions for at least one week, preferably at least two weeks, more preferably at least 3 weeks and even more preferably at least four weeks. Storage stable for at least one week means that after the dispersion has been stored under standard conditions for one week no discernible sediment is observed. In case sediment is detected by visual inspection of the aqueous dispersion, the aqueous dispersion is considered to be not storage stable.

As used herein, the term partially hydrolysed vinyl acetate (co)polymer with a hydrolysis degree of from 70 to 95 mol% is intended to mean vinyl alcohol (co)polymer in which from 70 to 95 of every 100 acetate groups originally present in the vinyl acetate (co)polymer from which the vinyl alcohol (co)polymer has been derived have been replaced by hydroxyl groups. Thus the partially hydrolysed vinyl acetate (co)polymer with a hydrolysis degree of from 70 to 95 mol% contains from 70 to 95 mol% of vinyl alcohol (i.e. ethen-1-ol) groups relative to the total molar amount of vinyl alcohol and vinyl acetate groups present in the partially hydrolysed vinyl acetate (co)polymer.

As used herein, the weight average molecular weight M_{w} is determined by triple detection gel permeation chromatography GPC using a mixture of water containing 0.15 molar NaCl and 0.08 molar tris(hydroxymethyl)aminomethane as eluent.

The amount of partially hydrolysed vinyl acetate (co)polymer in the aqueous dispersion is from 2% to 30% by weight, relative to the total amount of monomers used to prepare the vinyl polymer(s) of the dispersed polymeric particles. Preferably, the amount of partially hydrolysed vinyl acetate (co)polymer in the aqueous dispersion is from 5% to 25% by weight, more preferably from 10% to 25% by weight, relative to the total amount of monomers used to prepare the vinyl polymer(s) of the dispersed polymeric particles.

In the present invention, at least 95 wt.% of the total amount of partially hydrolysed vinyl acetate (co)polymer that is present in the aqueous dispersion of the present invention has a weight average molecular weight M_{w} from 25 to 500 kDalton (preferably from 25 to 200 kDalton) and a hydrolysis degree of from 70 to 95 mol%. It has been found that the substantial presence of partially hydrolysed vinyl acetate (co)polymer with a hydrolysis degree and/or molecular weight different than claimed in the aqueous dispersion of the present invention results in instable processing of the aqueous dispersion. This results in dispersed vinyl polymer particles with high tendency to coagulate or, in case a stable dispersion can be obtained, in a particle size outside the claimed range. Therefore, the total amount of partially hydrolysed vinyl acetate (co)polymer with a hydrolysis degree and/or molecular weight different than claimed present in the aqueous dispersion of the present invention should be lower than 5 wt.% (relative to the total amount of partially hydrolysed vinyl acetate (co)polymer present in the aqueous dispersion of the present invention), preferably lower than 4 wt.%, more preferably lower than 3 wt.%, more preferably lower than 2 wt.%, more preferably lower than 1 wt.% and even more preferably is 0 wt.%

The partially hydrolysed vinyl acetate (co)polymer (that is present in the aqueous dispersion in an amount of at least 95 wt.% relative to the total amount of partially hydrolysed vinyl acetate (co)polymer present in the aqueous dispersion) is preferably partially hydrolysed polyvinyl acetate, partially hydrolysed ethylene vinyl acetate or a mixture thereof. In one embodiment of the invention, the partially hydrolysed vinyl acetate (co)polymer (that is present in the aqueous dispersion in an amount of at least 95 wt.% relative to the total amount of partially hydrolysed vinyl acetate (co)polymer present in the aqueous dispersion) is partially hydrolysed ethylene vinyl acetate having a hydrolysis degree from 90 to 95 mol% and a weight average molecular weight M_{w} of at least 25 kDalton (and at most 500 kDalton). In another and preferred embodiment of the invention, the partially hydrolysed vinyl acetate (co)polymer (that is present in the aqueous dispersion in an amount of at least 95 wt.% relative to the total amount of partially hydrolysed vinyl acetate (co)polymer present in the aqueous dispersion) is partially hydrolysed polyvinyl acetate having a hydrolysis degree of from 70 to 90 mol% and a weight average molecular weight M_{w} of at least 50 kDalton, preferably at least 150 kDalton (and at most 500 kDalton).

The partially hydrolysed vinyl acetate (co)polymer (that is present in the aqueous dispersion in an amount of at least 95 wt.% relative to the total amount of partially hydrolysed vinyl acetate (co)polymer present in the aqueous dispersion) is preferably partially hydrolysed polyvinyl acetate having a hydrolysis degree of from 70 to 90 mol% and a weight average molecular weight M_{w} of at least 50 kDalton, preferably at least 150 kDalton (and at most 500 kDalton).

The aqueous dispersion of the present invention comprises decomposition products of the oil soluble organic initiator, which oil-soluble organic initiator has a water solubility of at most 1 g per l water at 20°C and the oil-soluble organic initiator is di-lauroyl peroxide (LPO), that are obtained by free radical polymerising of the vinyl monomers in the presence of the oil-soluble organic initiator which oil-soluble organic initiator has a water solubility of at most 1 g per l water at 20°C and the oil-soluble organic initiator is di-lauroyl peroxide (LPO), and the aqueous dispersion of the present invention optionally comprises non-decomposed oil-soluble organic initiator which oil-soluble organic initiator has a water solubility of at most 1 g per l water at 20°C and the oil-soluble organic initiator is di-lauroyl peroxide (LPO). The aqueous dispersion of the present invention preferably does not comprise a water soluble initiator in substantial amounts. The presence of at least a detectable amount of decomposition products of the oil soluble organic initiator which oil-soluble organic initiator has a water solubility of at most 1 g per l water at 20°C and the oil-soluble organic initiator is di-lauroyl peroxide (LPO), and optionally of oil-soluble organic initiator which oil-soluble organic initiator has a water solubility of at most 1 g per l water at 20°C and the oil-soluble organic initiator is di-lauroyl peroxide (LPO) in the dispersions of the present invention and the substantial absence of a water soluble initiator is an indication that the dispersed vinyl polymer particles of the aqueous dispersion are prepared by suspension polymerisation and not by other processes such as emulsion polymerisation. The oil-soluble organic initiator which oil-soluble organic initiator has a water solubility of at most 1 g per l water at 20°C and the oil-soluble organic initiator is di-lauroyl peroxide (LPO) is sufficiently soluble in the dispersed oil phase that produces the vinyl polymer to initiate suspension polymerisation. For di-lauroyl peroxide typical decomposition products are carbon dioxide, undecane, docosane and undecyl decanoate. By water soluble initiator is meant any initiator that if present would have been sufficiently soluble in the continuous aqueous phase to initiate polymerisation in the aqueous phase. Typically, from 0.01 to 2 wt.%, preferably from 0.02 to 1 wt. % of oil soluble organic initiator which oil-soluble organic initiator has a water solubility of at most 1 g per l water at 20°C and the oil-soluble organic initiator is di-lauroyl peroxide (LPO) (relative to the total amount of monomers used to prepare the vinyl polymer(s) of the dispersed polymeric particles) is used in the free radical polymerisation process of the vinyl monomers to prepare the aqueous dispersion of the present invention.

The dispersed vinyl polymeric particles present in the waterborne dispersions of the invention are prepared by a suspension polymerization process, more preferably a one-step suspension polymerization process in which all the monomers to prepare the dispersed vinyl polymer particles are present at the start of the suspension polymerization process and a single phase vinyl polymer is obtained. The suspension polymerisation is preferably effected at a temperature of from 10 to 95 °C, more preferably from 25 to 95 °C. The suspension polymerisation is preferably effected at a shear rate resulting from an agitator speed of less than 1000 rpm, preferably less than 750 rpm.

Accordingly, the aqueous dispersion of the present invention comprises (i) dispersed particles of vinyl polymer having a volume average particle size diameter (D50) of from 1 to 30 µm (microns) and particle size distribution of at most 2; and (ii) a partially hydrolysed vinyl acetate (co)polymer in an amount of from 2% to 30% by weight, relative to the total amount of monomers used to prepare the vinyl polymer(s) of the dispersed polymeric particles; wherein the dispersed particles are obtained by free radical polymerisation of vinyl monomers in the presence an oil-soluble organic initiator which oil-soluble organic initiator is di-lauroyl peroxide (LPO) and the partially hydrolysed vinyl acetate (co)polymer and wherein at least 95 wt.% of the partially hydrolysed vinyl acetate (co)polymer that is present in the aqueous dispersion has a weight average molecular weight M_{w} from 25 to 500 kDalton and a hydrolysis degree of from 70 to 95 mol%.

The aqueous dispersion of the invention as well as the process to prepare the aqueous dispersion of the invention can be and is preferably free of non-aqueous solvent (i.e. organic solvent) and/or preferably free of water-soluble initiator. The aqueous dispersion of the invention as well as the process to prepare the aqueous dispersion of the invention is preferably free of non-aqueous solvent (i.e. organic solvent) and free of water-soluble initiator. While free of usually means entirely free of, it will be appreciated that from a practically point of view it may sometimes be difficult to exclude very small amounts of non-aqueous solvent and/or water-soluble initiator, which would have no material effect on the process or composition, as e.g. when incorporating a small amount of commercially obtained additive which might contain very small amounts of non-aqueous solvent and/or water-soluble initiator.

The glass transition temperature T_{g} of the vinyl polymer of the dispersed particles is preferably higher than -65°C and lower than 150°C, preferably lower than 135°C and even more preferably lower than 125°C, whereby the glass transition temperature is measured as described herein.

The particle size distribution of the dispersed vinyl polymer particles is at most 2, whereby the particle size distribution is measured as described herein. The advantage of a small particle size distribution is that the amount of higher and lower sized particles is limited. Due to the presence of higher sized particles, higher coating thicknesses will be obtained and hence there is less freedom in coating thickness. Further the presence of lower sized particles may result in more difficult film formation of the aqueous coating composition.

The aqueous dispersion according to the invention comprises dispersed particles of vinyl polymer having a volume average particle size diameter (D50) of from 1 to 30 µm (microns).

Preferably, the dispersed vinyl polymer particles useful for preparing matt compositions have a volume average particle size diameter (D50) of from 2 to 20 µm, more preferably from 5 to 15 µm. Preferably, for preparing matt compositions with the aqueous dispersion according to the invention, the glass transition temperature T_{g} of the vinyl polymer present in the aqueous dispersion according to the invention is at least 50 °C, more preferably at least 60°C, more preferably at least 75°C and preferably lower than 150°C, more preferably lower than 135°C and even more preferably lower than 125°C, whereby the glass transition temperature is measured as described herein.

Preferably, the dispersed vinyl polymer particles useful for preparing compositions having improved haptic properties have a volume average particle size diameter (D50) of from 1 to 10 µm, more preferably from 1 to 5 µm. Preferably, for preparing compositions having haptic properties with the aqueous dispersion according to the invention, the glass transition temperature T_{g} of the vinyl polymer present in the aqueous dispersion according to the invention is at most 50 °C, preferably at most 0°C, more preferably at most -20 °C and preferably higher than -65°C, more preferably higher than -60°C, whereby the glass transition temperature is measured as described herein. Preferably, for preparing compositions having haptic properties with the aqueous dispersion according to the invention, the dispersed vinyl polymer particle is crosslinked, preferably by using self-crosslinkable polyunsaturated ethylenically unsaturated monomer for the preparation of the vinyl polymer.

Preferably, the density of the dispersed vinyl polymeric particles is in the range from 0.95 to 1.10 g/ml, in particular when the glass transition temperature T_{g} of the vinyl polymer present in the aqueous dispersion according to the invention is at most 50 °C, preferably at most 0°C, more preferably at most -20 °C and preferably higher than -65°C, more preferably higher than -60°C. It has surprisingly been found that, in particular for such low T_{g} vinyl polymers, the density of the dispersed vinyl polymeric particles in the aqueous dispersion has a substantial effect on the storage stability of the aqueous dispersion. In particular, with a density of dispersed low T_{g} vinyl polymeric particles in the range from 0.95 to 1.10 g/ml, a superior storage stability of the aqueous dispersion comprising the dispersed low T_{g} vinyl polymeric particles can be obtained. The density is measured at 20 °C and atmospheric pressure and is measured as a weight/volume ratio, i.e. by weighing a specified volume.

As used herein, volume average particle size diameter and particle size distribution are analyzed using laser diffraction with Malvern Mastersizer 3000 Particle Size Analyzer as described in ISO Standard 13320 (2009).

The aqueous dispersion according to the invention comprises dispersed vinyl polymer particles. The term vinyl polymer as used herein denotes any polymer obtained by polymerisation of at least one polymer precursor which comprises at least vinyl group i.e. a group that comprises a moiety with polymerisible olefinic (C=C) double bond. Preferably ethylene, propylene, butylene and isoprene are not used as vinyl polymer precursor.

The vinyl polymer is preferably an acrylic polymer. The term acrylic polymer as used herein denotes a polymer obtained by polymerisation of at least one polymer precursor (which comprises an acrylic (-HC=CHC(=O)O-) and/or a methacrylic (-HC=C(CH₃)C(=O)O-) moiety. The acrylic polymer may comprise other moieties including arylalkylenes such as styrene, although in one embodiment of the invention it is preferred that the compositions are substantially free of arylalkylenes.

The vinyl polymer preferably comprises
a) from 0 to 10 wt.% of potentially ionic mono-unsaturated ethylenically unsaturated monomers;
b) from 0 to 10 wt.% of mono-unsaturated ethylenically unsaturated monomers with a functional group for imparting crosslinkablilty when the aqueous coating composition is subsequently dried, other than a);
c) from 60 to 100 wt.% of mono-unsaturated ethylenically unsaturated monomers other than a) and b);
d) from 0 to 20 wt% of polyunsaturated ethylenically unsaturated monomer wherein the sum of a) to d) is 100 wt.% and the amounts of a) to d) is given relative to the total weight amount of the monomers to prepare the vinyl polymer.

More preferably, the vinyl polymer preferably comprises
a) from 0 to 3 wt.% of potentially ionic mono-unsaturated ethylenically unsaturated monomers;
b) from 0 to 5 wt.% of mono-unsaturated ethylenically unsaturated monomers with a functional group for imparting crosslinkablilty when the aqueous coating composition is subsequently dried, other than a);
c) from 72 to 100 wt.% of mono-unsaturated ethylenically unsaturated monomers other than a) and b);
d) from 0 to 20 wt% of polyunsaturated ethylenically unsaturated monomer wherein the sum of a) to d) is 100 wt.% and the amounts of a) to d) is given relative to the total weight amount of the monomers to prepare the vinyl polymer.

Even more preferably, the vinyl polymer preferably comprises
a) 0 wt.% of potentially ionic mono-unsaturated ethylenically unsaturated monomers;
b) from 0 to 3 wt.% of mono-unsaturated ethylenically unsaturated monomers with a functional group for imparting crosslinkablilty when the aqueous coating composition is subsequently dried, other than a);
c) from 77 to 100 wt.% of mono-unsaturated ethylenically unsaturated monomers other than a) and b); and
d) from 0 to 20 wt% of polyunsaturated ethylenically unsaturated monomer; wherein the sum of a) to d) is 100 wt.% and the amounts of a) to d) is given relative to the total weight amount of the monomers to prepare the vinyl polymer.

As used herein, potentially ionic monomer means a monomer which under the relevant conditions can be converted into an ionic monomer by neutralization. Potentially ionic mono-unsaturated ethylenically unsaturated monomers a) advantageously consist essentially of at least one ethylenically unsaturated carboxylic acid. More preferred acids have one ethylenic group and one or two carboxy groups. Most preferably the acid(s) are selected from the group consisting of: acrylic acid (and oligomers thereof), beta carboxy ethyl acrylate, citraconic acid, crotonic acid, fumaric acid, itaconic acid, maleic acid, methacrylic acid and mixtures thereof. Preferred potentially ionic mono-unsaturated ethylenically unsaturated monomers a) are acrylic acid, methacrylic acid and mixtures thereof.

The vinyl polymer may comprise mono-unsaturated ethylenically unsaturated monomers b) with a functional group for imparting crosslinkablilty when the aqueous coating composition is subsequently dried, other than a). Preferably the functional groups for imparting crosslinkablilty are selected from the group consisting of epoxy, carboxylic acid, hydroxyl, ketone and/or silane groups. Monomers b) with functional groups for imparting crosslinkablilty are preferably selected from glycidyl (meth)acrylate, hydroxyalkyl (meth)acrylates such as hydroxyethyl (meth)acrylate, acrolein, methacrolein and methyl vinyl ketone, the acetoacetoxy esters of hydroxyalkyl (meth)acrylates such as acetoacetoxyethyl (meth)acrylate, and keto-containing amides such as diacetone acrylamide. The functional group for providing crosslinkability is most preferably a ketone group. In case the vinyl polymer comprises monomer(s) b) with functional groups for imparting crosslinkablilty, the coating composition comprising the aqueous dispersion of the present invention is preferably combined with a crosslinking agent (i.e. so that crosslinking takes place e.g. after the formation of a coating therefrom). For example, monomer(s) with hydroxyl functional groups for imparting crosslinkablilty are used in combination with for example a polyisocyanate as crosslinking agent. Monomer(s) with functional groups for imparting crosslinkability comprising ketone and/or aldehyde functional groups are used in combination with for example a polyamine or a polyhydrazide as crosslinking agent. An example of a suitable polyamine is isophorone diamine. Examples of suitable polyhydrazides are adipic acid dihydrazide, oxalic acid dihydrazide, phthalic acid dihydrazide and terephthalic acid dihydrazide. A preferred polyhydrazide is adipic acid dihydrazide. A preferred combination of crosslinking agent and functional group for imparting crosslinkablilty when the coating composition is subsequently dried is the combination of adipic acid dihydrazide as crosslinking agent and at least one ketone group present in the monomer b) with functional groups for imparting crosslinkablilty. Diacetone acrylamide (DAAM) is a preferred monomer with ketone functional groups for use in combination with adipic acid dihydrazide.

The vinyl polymer comprises mono-unsaturated ethylenically unsaturated monomers c), other than a) and b). The mono-unsaturated ethylenically unsaturated monomers c) is preferably not ethylene, propylene, butylene or isoprene Preferably, the ethylenically unsaturated monomers c) are selected from the group consisting of acrylonitrile, acrylates, methacrylates, itaconates, acrylamides, arylalkylenes and any mixture thereof. Preferred arylalkylene monomers comprise (optionally hydrocarbo substituted) styrene and conveniently the optional hydrocarbo may be C₁₋₁₀hydrocarbyl, more conveniently C₁₋₄alkyl. Suitable arylalkylene monomers are selected from: styrene, α-methyl styrene, vinyl toluene, t-butyl styrene, di-methyl styrene and/or mixtures thereof, especially styrene.

More preferably, the ethylenically unsaturated monomers c) are selected from the group consisting of acrylates, methacrylates and any mixture thereof. Preferably the acrylate or methacrylate comprises hydrocarbo (meth)acrylate(s) and conveniently the hydrocarbo moiety may be C₁₋₂₀hydrocarbyl, more conveniently C₁₋₁₂alkyl, most conveniently C₁₋₈alkyl. Suitable (meth)acrylate(s) may be selected from: methyl (meth)acrylate, ethyl (meth)acrylate, isooctyl (meth)acrylate, 4-methyl-2-pentyl (meth) acrylate, 2-methylbutyl (meth) acrylate, isoamyl (meth)acrylate, sec-butyl (meth)acrylate, n-butyl (meth)acrylate, 2-ethylhexyl (meth)acrylate, 2-octyl (meth)acrylate, lauryl (meth)acrylate, isodecyl (meth)acrylate, isobornyl (meth)acrylate, cyclohexyl (meth)acrylate and/or mixtures thereof. The ethylenically unsaturated monomers c) preferably contains one or more C₁₋₈ alkyl (meth)acrylates, more preferably the ethylenically unsaturated monomers c) is one or more C₁₋₈ alkyl (meth)acrylates. Very suitable examples are methyl (meth)acrylate, ethyl (meth)acrylate, sec-butyl (meth)acrylate and n-butyl (meth)acrylate.

The vinyl polymer may comprise polyunsaturated ethylenically unsaturated monomers d). Preferably, for preparing compositions having haptic properties with the aqueous dispersion according to the invention, the vinyl polymer comprises polyunsaturated ethylenically unsaturated monomers d) preferably in an amount from 1 to 20 wt.% (relative to the total weight amount of the monomers to prepare the vinyl polymer), for obtaining crosslinked dispersed vinyl polymer particles. Preferred polyunsaturated ethylenically unsaturated monomers d) are allylmethacrylate and/or poly(propyleneglycol) diacrylate, preferably dipropyleneglycol diacrylate .

The vinyl polymer preferably has a weight average molecular weight of at least 100 kDaltons.

The vinyl polymer dispersed in the aqueous phase may be a single phase polymer or a multi-phase polymer, for example a sequential polymer. In an embodiment of the present invention, the vinyl polymer comprises a sequential polymer comprises at least two parts:
(i) a first part (P1) having a glass transition temperature (T_{g1}) of at least 50°C;
(ii) a second part (P2) having a glass transition temperature (T_{g2}) of 50°C or lower; where the weight ratio of P1 to P2 is from 20 / 80 to 80 / 20; and
where optionally the difference between T_{g1} and T_{g2} is at least 40, preferably at least 55 degrees.

To improve the matting properties of the dispersion of the present invention it may be desired that the vinyl polymer particles are substantially free of voids (i.e. the particles are substantially solid, non- porous particles). The vinyl polymer particles of the aqueous dispersion of the present invention are preferably substantially solid particles, that is are substantially non-porous particles comprising less than 10%, more preferably less than 5%, most preferably less 1% by volume of voids. Porous polymer particles comprise an interpenetrating network of holes and/or closed cells. To produce polymer particles with high porosity the particles may usefully be obtained by polymerization in the presence of an insoluble porogen, for example as described in US6060530. A porogen is a material used to form pores which is substantially insoluble in the polymerisation medium to which it is added. It is believed that as the polymer particles are being formed the insoluble porogen imbeds within the particle and does not dissolve during the reaction. After polymerisation the porogen is removed by a suitable method (e.g. leaching) to form highly porous polymer particles with voids therein. Alternatively porous polymer particles can be created by treating the particles with a porgonenic fluid (e.g. a suitable liquid solvent) which may form pores by partially dissolving the polymer within the particles to form voids therein.

To improve matting performance the applicant has found that it is preferably that the dispersed vinyl polymer particles of the aqueous dispersion of the present invention are substantially solid. Without wishing to be bound by any mechanism, the applicant believes that small pores within the polymer particles may increase the ability of the material to reflect light. It is thus advantageous that the particles are prepared without porogens being present. Thus the aqueous dispersion according to the invention is preferably be prepared by suspension polymerization in the absence of porogens and/or any porogenic fluid, more preferably in the absence of unsaturated monomers and organic solvents which act as porogens.

The present invention further relates to a process of suspension polymerisation for preparing the aqueous dispersion as described above, the process comprising the steps of:
i) dissolving the (co)polymer of vinyl alcohol as described above in an amount as described above in water to obtain an aqueous solution of the vinyl alcohol (co)polymer;
ii) mixing the vinyl monomer(s) with the oil-soluble organic initiator to obtain a solution, wherein the oil-soluble initiator has a water solubility of at most 1 g per l water at 20°C and wherein the oil-soluble organic initiator is di-lauroyl peroxide;
iii) mixing the aqueous solution of the vinyl alcohol (co)polymer obtained in i) with the solution obtained in step ii) at a shear rate resulting from an agitator speed of less than 1000 rpm (preferably less than 750 rpm);
iv) increasing the temperature of the mixture to from 25 to 95 °C under atmospheric pressure until polymerisation is substantially completed.

The present invention further relates to the use of the aqueous dispersion as described above as matting agent in aqueous coating composition comprising a latex polymer.

The present invention also relates to the use of the aqueous dispersion as described above whereby the glass transition temperature T_{g} of the vinyl polymer is at most 50 °C, preferably at most 0°C, more preferably at most -20 °C and preferably higher than -65°C, more preferably higher than -60°C, to obtain a matt coat (in particular < 40 gloss units at 60 degrees) with haptic properties when applied to a substrate or as haptic agent in aqueous coating composition comprising a latex polymer. In this embodiment of the present invention, the dispersed vinyl polymer particles are preferably crosslinked and the density of the dispersed vinyl polymeric particles is preferably from 0.95 to 1.10 g/ml.

The present invention also relates to an aqueous coating composition comprising a blend of at least an aqueous first dispersion of dispersed particles of vinyl polymer (first polymer) as described above (Dispersion A) and an aqueous second dispersion (Dispersion B) which Dispersion B comprises dispersed polymeric particles of a latex polymer (second polymer) and which Dispersion B forms a film having high gloss (> 60 gloss units at 60 degrees). The latex polymer is preferably a vinyl polymer, a polyurethane, an alkyd polymer, any combination thereof or any mixture thereof. The particles of the second polymer (Dispersion B) preferably has a volume average particle size diameter (D50) of less than 1 µm (micron) and preferably at least 90% of the particles by weight of the total amount of the particles of the second polymer has a size less than 500 nm (nanometers), preferably less than 200 nm, more preferably less than 150 nm.

The aqueous coating composition of the invention as described above can be applied to a substrate to form a matt coating (in particular < 40 gloss units at 60 degrees). In this embodiment, the weight ratio -calculated on solid polymers- of the first polymer to the second polymer is preferably from 1/99 to 30 / 70 (preferred 5/95 to 15/85) and the amount of dispersed vinyl polymer particles is preferably from 25 to 50 wt.%, more preferably from 25 to 45 wt.% (relative to the total amount of solids in the aqueous coating composition). Accordingly, the present invention also relates to a coating obtained by (i) applying to a substrate an aqueous coating composition as described above wherein the dispersed particles of vinyl polymer are preferably present in an amount of from 25 to 50wt.%, more preferably from 25 to 45 wt.% (relative to the total amount of solids in the aqueous coating composition), and (ii) drying the aqueous coating composition to obtain a matt coating.

The aqueous coating composition of the invention can also be applied to a substrate to form a coating having haptic properties. Surprisingly it has been found that control of matt values alone is generally insufficient to produce coatings having good haptic properties. Thus for example not all prior art matt coatings will necessary exhibit good haptic properties as other factors are also important. It is believed that the perception of haptic arises from a complex interaction between various surface properties such as surface friction, polymer modulus, wetness, roughness (relates to matt or gloss), warmness (e.g. as measured by thermal diffusivity) and/or hardness (e.g. as measured by Shore hardness). In this embodiment of the invention, the aqueous coating composition comprises an aqueous dispersion comprising dispersed vinyl polymer particles (i) preferably having a volume average particle size diameter (D50) of from 1 to 10 µm, more preferably from 1 to 5 µm, (ii) preferably having a density in the range from 0.95 to 1.10 g/ml, and/or (iii) preferably being crosslinked; and the glass transition temperature T_{g} of the vinyl polymer present in the aqueous dispersion is preferably at most 50 °C, more preferably at most 0°C, more preferably at most -20 °C and preferably higher than -65°C, more preferably higher than -60°C. In a specific embodiment, the second polymer is preferably a polyurethane, where the weight ratio -calculated on solid polymers- of the first polymer to the second polymer is from 10/90 to 50 /50, and where the aqueous coating composition may further comprise a second latex polymer (third polymer) in an amount from 0 to 30 wt.% (relative to the total amount of first, second and third polymer). The present invention further relates to a coating obtained by (i) applying to a substrate an aqueous coating composition as described above whereby the glass transition temperature T_{g} of the vinyl polymer of the dispersed particles is at most 50 °C, preferably at most 0°C, more preferably at most -20 °C and preferably higher than -65°C, more preferably higher than -60°C, wherein the dispersed vinyl polymer particles are preferably crosslinked, wherein the density of the dispersed vinyl polymeric particles is preferably from 0.95 to 1.10 g/ml and (ii) drying the aqueous coating composition to obtain a coating having haptic properties.

The aqueous coating composition according to the present invention may further comprise at least one further inorganic matting agent (which may be solid and/or a liquid wax) in an amount of no more than 10% by weight of the total polymer present in the composition; and
where the coating composition forms a matt (in particular < 40, preferably < 20, more preferably < 10 gloss units at 60 degrees) coat when applied to a substrate.

The aqueous coating composition of the invention may be applied to a variety of substrates including wood, card board, metal, stone, concrete, glass, fibres, (artificial) leather, paper, plastics, foam, tissues, (laminating) films and the like, by any conventional method including brushing, dipping, flow coating, spraying, and the like. The coating composition of the invention may also be used to coat the interior and/or exterior surfaces of three-dimensional articles. The carrier medium may be removed by natural drying or accelerated drying (by applying heat) to form a coating.

Another aspect of the invention provides a solid particulate composition obtained by spray and/or freeze drying an aqueous composition of the present invention as described herein.

A further aspect of the invention provides the use of the aqueous compositions of the invention or solid particulate composition obtained therefrom for a purpose selected from the group consisting of: biomedical; personal care, inks and/or coatings

### TEST METHODS AMD MEASUREMENTS

Unless otherwise indicated all the tests herein are carried out under standard conditions as also defined herein.

### Assessment of Coating

Where indicated in some of the above tests, the performance of a coating can be assessed by assessing the damage to the coating. Damage is preferably assessed either by measuring the weight percentage of the coating left on the substrate after the test but the coating can also be evaluated visually using the rating scale below where 5 is the best and 1 is the worse:
5 = very good: no visible damage or degradation / discoloration;
4 = only slight visible damage or haze / blooming;
3 = clear damage or haze / blooming;
2 = coating partially dissolved / damaged;
1 = very poor; coating is completely dissolved / damaged

### Blocking resistance (initial or early)

Coatings with a wet layer thickness of 120µm using a bird applicator were casted on Leneta 2C test card and dried for 24 hours at room temperature under standard conditions.

Resistance to blocking was carried out using a block tester, where pairs of the coated test charts were placed with the film coatings face to face and left at 50 °C for 4 hours with a pressure of 1 kg/ cm². After cooling to ambient temperature, the test charts were peeled apart and the degree of block resistance assessed, ranging from 0 (very poor blocking resistance) to 5 (excellent blocking resistance). When the test charts could be peeled apart using a minor force without damaging the surface of the film blocking was assessed as 3.

### Chemical resistance

Coatings with a wet layer thickness of 120µm using a bird applicator were casted on Leneta 2C test card and dried for 16 hours at 50°C. The chemical resistances were assessed visually after the pre-described spot test time.

### Dry rub resistance (= Burnish resistance)

Coatings with a wet layer thickness of 120µm using a bird applicator were casted on Leneta 2C test card and dried for 1 week at room temperature. The dry rub resistance was tested by using the Satra applying 1000 dry rubs. Satra rub resistance (to gloss) is tested using a Satra Rub tester STM 462 with felt pads with a chosen amount of rotations.

### Water resistance (initial or early)

Coatings with a wet layer thickness of 120µm using a bird applicator were casted on Leneta 2C test card and dried for 24 hours at room temperature under standard conditions to form a film coating.

Two drops of water are applied to the film. The first drop is removed after 15 minutes, the second drop after 120 minutes and after each spot the film is visually assessed. The film is also assessed after having recovered for 24 hours after the first water has been applied.

A film with excellent water resistance will not turn white nor will it blister, this rated "5". Poor water resistance, where the film either strongly whitens or blisters, is rated "0".

### Water absorption

Coatings with a wet layer thickness of 400µm using a block applicator were casted on release paper and dried for 16 hours at 50°C. The coating was removed for the release paper and immersed in tap water for 24 hours. The water absorption was measured in percentages by the weight increase.

### Gloss analysis

Gloss is determined by casting a pre-defined wet film thickness coating on a LENETA 2C Opacity Chart and determining gloss using a BYK-Gardner micro TRI-gloss analyser. Gloss is determined according DIN67530 and reported in gloss units under 20, 60 and 85° angles.

### Glass Transition Temperature (T_{g})

The T_{g} is measured using Differential Scanning Calorimetry according to ISO Standard 1357.

### Hydrolysis degree analysis

Following method describes the typical analysis of the hydrolysis degree of fully and partially hydrolyzed PVOHs. Method is derived from one of the leading PVOH suppliers, i.e. CCP.

### A. Fully hydrolyzed grade :

Weigh 3 g of the sample into a 300 ml stoppered conical flask and pour 100ml of distilled water to dissolve the sample completely by heating then leave it cool to room temperature.

Add 25 ml of 0.1N NaOH solution, seal the flask and leave it still for at least 2 hours at room temperature.

Add accurately 25 ml of 0.1N H₂SO₄ solution and titrate back the excess amount of H₂SO₄ solution present with 0.1N NaOH solution using phenolphthalein as the indicator, until the solution appears in pale pink color.

The volume of 0.1N NaOH solution consumed in this titration is a ml. Carry out a blank test separately; the volume of 0.1N NaOH solution consumed in this blank test is b ml.

Where:
A : wt % of residual acetate groups
B : mole % of residual acetate groups
C : mole % of hydrolysis of the sample
S : weight of the initial sample
P : Purity = 100 - volatile of the sample - NaAc content of the sample
F : concentration factor of 0.1N NaOH solution

### B. Partially hydrolyzed grade :

Weigh 0.5 g of the sample into a 300 ml stoppered conical flask and pour 100 ml of distilled water to dissolve the sample completely by heating then leave it cool to room temperature.

Add 25 ml of 0.1N NaOH solution, seal the flask and leave it still for at least 2 hours at room temperature.

Add accurately 25 ml of 0.1N H₂SO₄ solution and titrate back the excess amount of H₂SO₄ solution present with 0.1N NaOH solution using phenolphthalein as the indicator, until the solution appears in pale pink color.

The volume of 0.1N NaOH solution consumed in this titration is a ml. Carry out a blank test separately; the volume of 0.1N NaOH solution consumed in this blank test is b ml.
A = 0.60*(a-b)*F*100/(S*P)
B = 44.05*A/(60.05-0.42*A)
Hydrolysis degree C = 100 - B

### Volume average particle size diameter (D50) and particle size distribution (defined as (D90-D10)/D50

Volume average particle size diameter and particle size distribution are analyzed using laser diffraction with Malvern Mastersizer 3000 Particle Size Analyzer as described in ISO Standard 13320 (2009).

### Standard Conditions

As used herein, unless the context indicates otherwise, standard conditions (e.g. for drying a film) means a relative humidity of 70% ±5%, ambient temperature (23°C ±2°), atmospheric pressure and an air flow of ≤ (less than or equal to) 0.1m/s.

### Procedure for analysis of decomposition products of the oil-soluble organic initiator di-lauroyl peroxide

The analysis is performed using GCMS. A column splitter is installed post-column in order for the MS and FID to detect the separated components simultaneously. The samples are diluted in acetone with iso-butylacrylate as internal standard. After extraction the clear part is injected as a liquid in an Optic 4 injector at 40°C. The injector is then heated to 300°C as fast as possible. The split ratio is 1 : 10. The separation is performed on a RXI-624 sil MS column. The linear gas velocity is kept at 30 cm/sec during the entire analysis. The initial oven temperature is 40 °C for 0.5 minute and then ramped up to 300°C with a rate of 20°C per minute. The hold time at the maximum temperature is 10 minutes. The identification of the components is performed using the MS-data. The quantification is performed using the FID data and the results are calculated as toluene equivalents.

### Examples

### Abbreviations used

BA denotes n-butylacrylate
EA denote ethylacrylate
BMA denotes n-Butylmethacrylate
2-EHA denotes 2-ethylhexylacrylate
DPGDA denotes di-propyleneglycol-di-acrylate
MMA denotes methylmethacrylate
i-BMA denotes iso-butylmethacrylate
DM denotes demineralised water
LPO denotes di-lauroylperoxide
PVOH denotes polyvinylalcohol
EVOH denotes ethylene vinyl alcohol
HD=hydrolysis degree as determined by .....
M_{w}= weight average molecular weight as determined by triple detetection GPC....
Tg denotes glass transition temperature calculated according Flory Fox equation or measured according to DSC
NeoRez R2180 denotes film forming polyurethane dispersion
NeoRez R600 denotes soft film forming polyurethane dispersion

### Examples 1-6 and Comparative Experiments A-E: Preparing suspension dispersions of low T_{g} polymer

**Table 1: Impact hydrolysis degree and molecular weight of PVOH stabilisers on processing of the dispersion and particle size**

| Label | Ingredients | Comp Ex A | Comp Ex B | Comp ExC | Ex 1 | Ex 2 | Ex 3 | Ex 4 |
|---|---|---|---|---|---|---|---|---|
| | | [g] | [g] | [g] | [g] | [g] | [g] | [g] |
| '1' | DM | 694.38 | 694.38 | 697.48 | 701.24 | 694.38 | 700.58 | 683.22 |
| '2' | PVOH (HD=99%/Mw=108kDa) | 44.24 | | | | | | |
| | PVOH (HD=99%/Mw=20kDa) | | 44.24 | | | | | |
| | PVOH (HD=94%/Mw=45kDa) | | | | 59.75 | | | |
| | PVOH (HD=88%/Mw=160kDa) | | | 5.25 | | 44.24 | | |
| | PVOH (HD=78%/Mw=185kDa) | | | | | | 44.70 | |
| | PVOH (HD=72%/MW=50kDa) | | | | | | | 55.40 |
| '3' | BA | 233.49 | 233.49 | 268.22 | 212.98 | 233.49 | 227.54 | 233.49 |
| '4' | DPGDA | 25.94 | 25.94 | 29.80 | 23.66 | 25.94 | 25.28 | 25.94 |
| '5' | LPO | 1.95 | 1.95 | 2.25 | 2.37 | 1.95 | 1.90 | 1.95 |
| | | -------- | -------- | -------- | -------- | -------- | -------- | -------- |
| Total | | 1000.00 | 1000.00 | 1000.00 | 1000.00 | 1000.00 | 1000.00 | 1000.00 |
| | | | | | | | | |
| BA/DPGDA ratio [wt%] | | 90/10 | 90/10 | 90/10 | 90/10 | 90/10 | 90/10 | 90/10 |
| PVOH on total monomer [wt%] | | 17.05 | 17.05 | 1.75 | 25.0 | 17.05 | 17.68 | 21.35 |
| Agitator speed [rpm] | | 650 | 650 | 650 | 650 | 650 | 650 | 650 |
| Dispersion processing result | | Failure | Failure | Failure | Pass | Pass | Pass | Pass |
| Tg dispersed particles (DSC) [°C] | | ----- | ----- | -38 | -38 | -38 | -38 | -38 |
| D₅₀ average particle size dispersed polymer particle [µm] | | ----- | ----- | 49.6 | 8.1 | 5.7 | 3.0 | 3.3 |
| Part size distribution (d90-d10/d50) | | ----- | ----- | 5.18 | 1.65 | 1.72 | 1.64 | 1.44 |
| Density dispersed polymer particles [g/ml] | | ----- | ----- | 1.098 | 1.098 | 1.098 | 1.098 | 1.098 |

**Table 2: Impact hydrolysis degree and molecular weight of EVOH stabilisers on processing of the dispersion and particle size**

| Label | Ingredients | Comp Ex D | Comp Ex E | Ex 5 | Ex 6 |
|---|---|---|---|---|---|
| | | [g] | [g] | [g] | [g] |
| ¹1, | DM | 700.05 | 700.05 | 700.05 | 700.05 |
| '2' | EVOH (HD=98-99% / Mw=27kDa) | 44.65 | | | |
| | EVOH (HD=97.5-99% / Mw=102kDa) | | 44.65 | | |
| | EVOH (HD=92-94% / Mw=28kDa) | | | 44.65 | |
| | EVOH (HD=92-94% / Mw=102kDa) | | | | 44.65 |
| '3' | BA | 228.06 | 228.06 | 228.06 | 228.06 |
| '4' | DPGDA | 25.34 | 25.34 | 25.34 | 25.34 |
| '5' | LPO | 1.90 | 1.90 | 1.90 | 1.90 |
| | | -------- | -------- | -------- | -------- |
| Total | | 1000.00 | 1000.00 | 1000.00 | 1000.00 |
| | | | | | |
| BA/DPGDA ratio [wt%] | | 90/10 | 90/10 | 90/10 | 90/10 |
| EVOH on total monomer [wt%] | | 17.62 | 17.62 | 17.62 | 17.62 |
| Agitator speed [rpm] | | 650 | 650 | 650 | 650 |
| Dispersion processing result | | Failure | Failure | Pass | Pass |
| D₅₀ average particle size dispersed polymer particle [µm] | | ----- | ----- | 8.4 | 6.1 |
| Part size distribution (d90-d10)/d50 | | ----- | ----- | 1.83 | 1.63 |

### Preparation of Dispersions with reference to Tables 1-5

Ingredients '1' and '2' are added to the reactor, equipped with nitrogen inlet, Pt100, exhaust cooling and stirrer. Contents are heated to 90°C and temperature maintained for 60 minutes to fully dissolve '2'. Next content is cooled to room temperature. Ingredients '3' to '5' are added to the monomer feed tank and mixed until '5' is fully dissolved and a homogeneous solution is obtained in '3' and '4'. Accordingly monomer feed tank content is transferred to the reactor, the stirrer speed slowly adjusted to 650rpm and reactor heated to 70°C. This temperature is maintained for 90 minutes. During this hold period, temperature is controlled at 70±2°C by cooling/heating and typical Trommsdorf (gelstage) is reached after 60-70 minutes after reaching 70°C. After the 70°C hold period reactor content is heated to 80-90°C and maintained for 120 minutes to drive conversion to completion. Next the obtained dispersion is cooled to 25°C.

Note: The indicated "Pass" processes pass the critical suspension polymerization's Trommsdorf stage without noticeable problems resulting in stable final dispersions. The indicated "Failure" processes fail during the critical Trommsdorf stage resulting in full agglomeration of particles and failing dispersion stability, except for comparative experiment C in which the dispersion remains stable only for a few hours.

### Examples 7-12: Preparing suspension dispersions of high Tg polymer

**Table 3. Working examples high Tg dispersions and effect on dispersion stability**

| Label | | Ex 7 | Ex 8 | Ex 9 | Ex 10 | Ex 11 | Ex 12 |
|---|---|---|---|---|---|---|---|
| '1, | DM | 700.00 | 700.00 | 700.00 | 700.00 | 700.00 | 700.00 |
| '2' | PVOH (HD=88%/Mw=160kDa) | 44.66 | 44.66 | 44.66 | 44.66 | 44.66 | 44.66 |
| '3' | MMA | 253.44 | 202.75 | 152.06 | 101.38 | 50.69 | - |
| '4' | i-BMA | ----- | 50.69 | 101.38 | 152.06 | 202.75 | 253.44 |
| '5' | LPO | 1.90 | 1.90 | 1.90 | 1.90 | 1.90 | 1.90 |
| | | ---------- | ---------- | ---------- | ---------- | ---------- | ---------- |
| Total | | 1000.00 | 1000.00 | 1000.00 | 1000.00 | 1000.00 | 1000.00 |
| | | | | | | | |
| MMA/i-BMA ratio [wt%] | | 100/0 | 80/20 | 60/40 | 40/60 | 20/80 | 0/100 |
| PVOH on total monomer [wt%] | | 17.62 | 17.62 | 17.62 | 17.62 | 17.62 | 17.62 |
| Agitator speed [rpm] | | 650 | 650 | 650 | 650 | 650 | 650 |
| Tg calculated [°C] | | 105.0 | 96.2 | 86.7 | 76.4 | 65.2 | 53.0 |
| Calculated polymer density [g/ml] | | 1.200 | 1.18 | 1.15 | 1.12 | 1.09 | 1.04 |
| Calculated dispersion density [g/ml] | | 1.020 | 1.018 | 1.016 | 1.014 | 1.012 | 1.010 |
| Dispersion processing result | | Pass | Pass | Pass | Pass | Pass | Pass |
| D₅₀ average particle size dispersed polymer particle [µm] | | 3.8 | 4.9 | 5.5 | 8.7 | 10.1 | 12.5 |
| Part size distribution (d90-d10)/d50 | | 1.53 | 1.57 | 1.59 | 1.75 | 1.74 | 1.85 |
| Measured dispersion density [g/ml] | | 1.045 | 1.017 | 1.021 | 1.001 | 0.998 | 1.000 |
| Dispersion stability [Visual] | | 4 - 5 | 5 | 4 - 5 | 4 - 5 | 4 - 5 | 4 - 5 |
| *Density of the corresponding PVOH solution (1'*+ *'2) applied in table 3 examples is measured at 1.005g*/*ml vs 1.008g*/ *ml calculated* | | | | | | | |

### Stability method description

40 grams of the prepared dispersion was stored in 50ml glass jar at room temperature for a period of 6 weeks. Stability of the dispersions was weekly screened by turning the jars upside down and determining visually the level of sediment on the bottom of the jar. Following score rating was applied to evaluate stability of the dispersions:
Score 1: fully settled
2: heavy settling
3: moderate settling
4: little settling
5: no settling

### Comparative Experiments F-K: Preparing suspension dispersions

**Table 4. Non-working examples high Tg dispersions and effect on dispersion processing**

| Label | | Comp Ex F | Comp Ex G | Comp Ex H | Comp Ex I | Comp Ex J | Comp Ex K |
|---|---|---|---|---|---|---|---|
| '1' | DM | 700.00 | 700.00 | 700.00 | 700.00 | 700.00 | 700.00 |
| '2' | PVOH (HD=99%/Mw=110kDa) | 44.66 | | 44.66 | | 44.66 | |
| | PVOH (HD=99%/Mw=20kDa) | | 44.66 | | 44.66 | | 44.66 |
| '3' | MMA | 253.44 | 253.44 | 126.72 | 126.72 | ---------- | ---------- |
| '4' | i-BMA | ---------- | ---------- | 126.72 | 126.72 | 253.44 | 253.44 |
| '5' | LPO | 1.90 | 1.90 | 1.90 | 1.90 | 1.90 | 1.90 |
| | | ---------- | ---------- | ---------- | ---------- | ---------- | ---------- |
| Total | | 1000.00 | 1000.00 | 1000.00 | 1000.00 | 1000.00 | 1000.00 |
| | | | | | | | |
| MMA/i-BMA ratio [wt%] | | 100/0 | 100/0 | 50/50 | 50/50 | 0/100 | 0/100 |
| PVOH on total monomer [wt%] | | 17.62 | 17.62 | 17.62 | 17.62 | 17.62 | 17.62 |
| Agitator speed [rpm] | | 650 | 650 | 650 | 650 | 650 | 650 |
| Tg calculated [°C] | | 105.0 | 105.0 | 81.6 | 81.6 | 53.0 | 53.0 |
| Calculated polymer density [g/ml] | | 1.200 | 1.20 | 1.14 | 1.14 | 1.04 | 1.04 |
| Calculated dispersion density [g/ml] | | 1.020 | 1.020 | 1.015 | 1.015 | 1.010 | 1.010 |
| Dispersion processing result | | Fail | Fail | Fail | Fail | Fail | Fail |
| D₅₀ average particle size [µm] | | ----- | ----- | ----- | ----- | ----- | ----- |
| Part size distribution (d90-d10)/d50 | | ----- | ----- | ----- | ----- | ----- | ----- |
| Meassured density [g/ml] | | ----- | ----- | ----- | ----- | ----- | ----- |
| Dispersion stability [Visual] | | ----- | ----- | ----- | ----- | ----- | ----- |
| *Density of the corresponding PVOH solution ('1'*+ *'2') applied in table 4 examples is measured at 1.005g*/*ml vs 1.008g*/ *ml calculated* | | | | | | | |

Similar to the non-working examples of Table 1, i.e. low Tg n-BA based compositions, it was tested whether higher Tg compositions would show the same dispersion processing trends.

It can be concluded that the high hydrolysis degree PVOHs, whatever the molecular weight is, does not provide the proper stability required to enable preparation of dispersions as claimed.

### Examples 13-17: Preparing suspension dispersions and effect of polymer composition on matting and perceived feel (haptic behavior)

Suspension dispersions are prepared as described above, making use of components in amounts as shown in Table 5.
50micron wet films of the liquid blends are accordingly casted onto LENETA 2C Opacity Charts and dried in 50°C ventilated oven for 15 minutes. Matting efficiency is determined by measuring gloss using a BYK-Gartner gloss analyser.

**Table 5: Effect of polymer composition and particle size on gloss and perceived feel (haptic behavior)**

| Label | | Ex 13 | Ex 14 | Ex 15 | Ex 16 | Ex 17 |
|---|---|---|---|---|---|---|
| '1' | DM | 707.04 | 672.50 | 672.50 | 687.70 | 687.70 |
| '2' | PVOH (HD=88%/Mw=160kDa) | 40.93 | 75.00 | 75.00 | 59.80 | 59.80 |
| '3' | MMA | 249.54 | | | | |
| | BMA | | 225.00 | | | |
| | EA | | | 225.00 | | |
| | BA | | | | 225.00 | |
| | 2-EHA | | | | | 225.00 |
| '4' | DPGDA | ----- | 25.00 | 25.00 | 25.00 | 25.00 |
| | | | | | 126.72 | |
| '5' | LPO | 2.49 | 2.50 | 2.50 | 2.50 | 2.50 |
| | | --------- | --------- | --------- | --------- | --------- |
| Total | | 1000.00 | 1000.00 | 1000.00 | 1000.00 | 1000.00 |
| | | | | | | |
| Acrylic/DPGDA ratio [wt%] | | 100/0 | 90/10 | 90/10 | 90/10 | 90/10 |
| PVOH on total monomer [wt%] | | 16.37 | 16.37 | 17.62 | 17.62 | 17.62 |
| Agitator speed [rpm] | | 350 | 550 | 550 | 650 | 650 |
| Tg dispersed particles (DSC) [°C] | | 122 | 31 | -5 | -38 | -53 |
| Dispersion processing result | | Pass | Pass | Pass | Pass | Pass |
| D₅₀ average particle size [µm] | | 9.8 | 9.2 | 5.8 | 2.6 | 2.8 |
| Part size distribution (d90-d10)/d50 | | 1.59 | 1.52 | 1.60 | 1.50 | 1.72 |
| Matting behaviour 50µm wet coating | | | | | | |
| Gloss @20° [GU] | | 0.1 | 0.2 | 0.2 | 0.3 | 0.1 |
| Gloss @60° [GU] | | 0.6 | 0.4 | 0.8 | 1.0 | 0.9 |
| Gloss @85° [GU] | | 3.1 | 2.0 | 6.0 | 32.3 | 24.0 |
| Perceived feel dry coating | | Rigid Paper | Rigid Paper | Smooth Silky | Smooth Peach | Smooth Velvet |

The gloss data shows that irrespective the composition all grades show a high level of matting, i.e. low gloss level at 60° angle. At a particle size below 5microns especially gloss level at 85° angle shows a steep increase. This aspect is of particular importance in case transparency of the final coating is desired. This can be tuned by optimizing particle size in the 1-5micron range.

The perceived feel is typically related to firstly the polymer composition and secondly the particle size. Primarily feel can be tuned by altering the Tg of the acrylic copolymer composition. Crosslinked low Tg compositions, typically below 0°C, provide a substantially nicer feel/touch. The specific requirements, with respect to e.g. feel/touch, transparancy can be further fine-tuned with optimizing particle size.

### Example 18 and Comparative Experiments 18', 18A and 18A'

**Table 6. Impact of stabiliser and/or initiator system on dispersion processing and final particle size**

| Label | Raw materials | Purpose | Ex 18 | Comp Ex 18' | Comp Ex 18A | Comp Ex 18A' |
|---|---|---|---|---|---|---|
| '1' | DMwater | Solvent | 700.45 | 700.01 | 508.28 | 577.67 |
| '2' | PVOH (HD=92%/Mw=164 kDa) | Stabiliser | 52.68 | 52.71 | | |
| '3' | Sodium Lauryl Sulphate (30%) | Stabiliser | | | 32.25 | 32.25 |
| '4' | BA | Monomer | 220.53 | 221.88 | 348.49 | 348.49 |
| '5' | DPGDA | Monomer | 24.50 | 24.65 | 38.69 | 38.69 |
| '6' | LPO | Initiator | 1.84 | | | 2.90 |
| '7' | t-BHPO | Initiator | | 0.38 | 2.78 | |
| 18, | Bruggolite FF6 | Reducing agent | | 0.37 | 1.39 | |
| '9' | DMwater | Solvent | | | 68.12 | |
| | | | | | | |
| Total wet dispersion | | | 1000.00 | 1000.00 | 1000.00 | 1000.00 |
| | | | | | | |
| Acrylic/DPGDA ratio [wt%] | | | 90/10 | 90/10 | 90/10 | 90/10 |
| PVOH on total monomer [wt%] | | | 21.50 | 21.38 | ----- | ----- |
| Sodium Lauryl Sulphate on total monomer [wt%] | | | ----- | ----- | 2.50 | 2.50 |
| Agitator speed [rpm] | | | 650 | 650 | 150 → 400 | 150 → 250 |
| Tg dispersed particles (DSC) [°C] | | | -38 | -38 | -38 | -38 |
| Dispersion processing result | | | Pass | Fail | Fail | Fail |
| D₅₀ average particle size [µm] | | | 6.4 | ----- | 0068 ¹⁾ | 192 ²⁾ |
| Part size distribution (d90-d10)/d50 | | | 1.70 | ----- | 0.25 | 3.14 |
| ¹⁾ Processing is critical with a lot of fouling and resulting particle size is much too low | | | | | | |
| ²⁾ Unstable processing resulting in average particle size largely exceeding claimed range with high particle size distribution | | | | | | |

Preparation of example 18 with reference to table 6 is based on the previously described procedure, with the proviso that ingredients '4' to '6' are added to the monomer feed tank and mixed until '6' is fully dissolved and a homogeneous solution is obtained in '4' and '5'. The dispersion of example 18 having a solids content of 27.2 wt.% was analysed with the procedure to analyze decomposition products of the oil-soluble organic initiator di-lauroyl peroxide as described above: the detected amount of undecane was 0.05 wt.% on solids and the detected amount of docosane was 0.16 wt% on solids.

Preparation of Comparative example 18' with reference to table 6 is based on the previous described method with the proviso that ingredients '4', '5' and '7' are added to the monomer feed tank and mixed until '7' is fully dissolved and a homogeneous solution is obtained in '4' and '5' and with the proviso that the initiation is done at 40-50°C upon addition of '8' (the Bruggolite FF6 reducing agent), after which the exotherm is automatically started and not thermally regulated as with the other examples.

### Preparation Comparative example 18A with reference to table 6 (Emulsion approach applying t-BHPO)

Ingredients '1', '3' and '7' are added to the reactor, equipped with nitrogen inlet, Pt100, exhaust cooler, stirrer and feedtanks. Ingredients '4' and '5' are transferred to a monomer feedtank and ingredient '8' is dissolved in '9' and transferred to the reducing agent feedtank. Reactor is heated to 80°C and upon reaching 80 °C monomer and reducing agent feeds are in 60 minutes transferred to the reactor whilst maintaining a temperature of 80 ± 2°C. After the feeds are completed, reactor is maintained at 80°C for another 60 minutes to drive conversion to completion. Next obtained dispersion is cooled to 25°C.

### Preparation Comparative example 18A' with reference to table 6 (Emulsion approach applying LPO)

Ingredients '1' and '3' are added to the reactor, equipped with nitrogen inlet, Pt100, exhaust cooler, stirrer and monomer feedtank. Ingredients '4', '5' and '6' are transferred to a monomer feedtank and stirred until '6' is fully dissolved. Reactor is heated to 80°C and upon reaching 80 °C monomer feed is in 60 minutes transferred to the reactor whilst maintaining a temperature of 80 ± 2°C. After the feed is completed, reactor is maintained at 80°C for another 60 minutes to drive conversion to completion. Next obtained "product" is cooled to 25°C.

Comp Ex 18' shows a failing process. During processing phase inversion and gelation was observed.
Comp Ex 18A shows a lot of fouling with resulting particle size much too small opposite claimed particle size range and resulting in films without proper matting and sensory performance.
Comp Ex 18A' also shows a failing process resulting in an average particle size largely exceeding claimed range and therefore not fit for matting and haptic application.

Results clearly show the effect of applying the more hydrophilic initiator t-BHPO vs the oil-soluble initiator LPO, which directly affects the way the monomers/droplets are stabilized.

The stabilizing effect of PVOH opposite sodium lauryl sulfate SLS and the resulting particle size is largely influenced by the type of initiator used. Only by using the combination of the claimed PVOH with an oil-soluble initiator (LPO), a stable dispersion can be obtained with a particle size suitable for matting and haptic performance.

### Comparative Experiments 18B, 18C, 18D and 18E

**Table 6': Impact of PVOH stabiliser combinations on processing applying t-BPHO vs LPO as initiator**

| Label | Raw materials | Purpose | Comp Ex 18B | Comp Ex 18C | Comp Ex 18D | Comp Ex 18E |
|---|---|---|---|---|---|---|
| '1' | DMwater | Solvent | 700.74 | 700.66 | 700.16 | 701.96 |
| '2' | PVOH (HD=88%/Mw=160kDa) | Stabiliser | 4.29 | 19.07 | 4.31 | 19.76 |
| '3' | PVOH (HD=88%/Mw=25kDa) | Stabiliser | 4.29 | 19.07 | 4.31 | 19.76 |
| '4' | PVOH (HD=99%/Mw=20kDa) | Stabiliser | 2.86 | 12.71 | 2.87 | 13.17 |
| '5' | BA | Monomer | 257.11 | 221.98 | 258.72 | 220.14 |
| '6' | DPGDA | Monomer | 28.57 | 24.66 | 28.75 | 24.46 |
| '7' | LPO | Initiator | 2.14 | 1.85 | | |
| '8' | t-BHPO | Initiator | | | 0.45 | 0.38 |
| '9' | Bruggolite FF6 | Reducing agent | | | 0.43 | 0.37 |
| Total wet dispersion | | | 1000.00 | 1000.00 | 1000.00 | 1000.00 |
| | | | | | | |
| Acrylic/DPGDA ratio [wt%] | | | 90/10 | 90/10 | 90/10 | 90/10 |
| PVOH (HD=88%/Mw=160kDa) on total monomer [wt%] | | | 1.50 | 7.73 | 1.50 | 8.08 |
| PVOH (HD=88%/Mw=25kDa) on total monomer [wt%] | | | 1.50 | 7.73 | 1.50 | 8.08 |
| PVOH (HD=99%/Mw=20kDa) on total monomer [wt%] | | | 1.00 | 5.15 | 1.00 | 5.38 |
| PVOH total on total monomers [wt%] | | | 4.00 | 20.61 | 4.00 | 21.54 |
| Agitator speed [rpm] | | | 650 | 650 | 650 | 650 |
| Tg dispersed particles (DSC) [°C] | | | -38 | -38 | -38 | -38 |
| Dispersion processing result | | | Fail | Fail | Fail | Fail |
| D₅₀ average particle size [µm] | | | ----- | ----- | ----- | ----- |
| Part size distribution (d90-d10)/d50 | | | ----- | ----- | ----- | ----- |

### Preparation of dispersions of Comparative Experiments 18B and 18C with reference to Table 6'.

Ingredients '1', '2', '3' and '4" are added to the reactor, equipped with nitrogen inlet, Pt100, exhaust cooling and stirrer. Contents are heated to 90°C and temperature maintained for 60 minutes to fully dissolve '2', '3' and '4'. Next content is cooled to room temperature. Ingredients '5' to '7' are added to the monomer feed tank and mixed until '7' is fully dissolved and a homogeneous solution is obtained in '5' and '6'. Accordingly monomer feed tank content is transferred to the reactor, the stirrer speed slowly adjusted to the indicated agitator speed and reactor heated to 70°C. This temperature is maintained for 90 minutes. During this hold period, temperature is controlled at 70±2°C by cooling/heating and typical Trommsdorf (gelstage) is reached after 60-70 minutes after reaching 70°C. After the 70°C hold period reactor content is heated to 80-90°C and maintained for 120 minutes to drive conversion to completion. Next the obtained dispersion is cooled to 25°C.

### Preparation of dispersions of Comparative Experiments 18D and 18E with reference to Table 6'

Ingredients '1', '2', '3' and '4" are added to the reactor, equipped with nitrogen inlet, Pt100, exhaust cooling and stirrer. Contents are heated to 90°C and temperature maintained for 60 minutes to fully dissolve '2', '3' and '4'. Next content is cooled to room temperature. Once roomtemperture conditions are achieved ingredient '8' is added to the reactor. Ingredients '5' and '6' are added to the monomer feed tank and mixed until a homogeneous solution is obtained. Temperature is raised to 40-50°C. Accordingly reducing agent '9' is added triggering polymerisation start. Once exotherm is completed the reactor temperature is levelled at 80°C and maintained at 80°C for 120 minutes in total. Next the obtained dispersion is cooled to 25°C.

Comparative Experiments 18B, 18C, 18D and 18E clearly show that processing fails in absence of claimed amount of suited hydrolysis degree and molecular weight PVOH and this irrespective of the type of initiator. This supports the results as presented in the tables 1, 2 and 3 that PVOH concentration, hydrolysis degree and molecular weight play a crucial role for obtaining a stable processing and a final dispersion having a particle size in the claimed range.

### Comparative Experiment L and Examples 19-33

**Table 6a. Data blend binders for matting application**

| Label | Raw materials | | Purpose | High Gloss Comp Ex L | Ex 19 | Ex 20 | Ex 21 |
|---|---|---|---|---|---|---|---|
| '1' | | NeoRez R-2180 | PU Binder | 874.43 | | | |
| '2' | | DM | Solvent | 71.38 | 673.92 | 703.84 | 685.00 |
| '3' | | Dowanol DPnB | Coalescent | 47.93 | | | |
| '4' | | BYK 028 | Defoamer | 5.16 | | | |
| '5' | | Polyfox PF151N | Flow aid | 1.10 | | | |
| '6' | | PVOH (HD=88%/Mw=160kDa) | Stabilizer | | 74.83 | 44.91 | 62.50 |
| '7' | | BA | Monomer | | 225.00 | 225.00 | 225.00 |
| '8' | | DPGDA | Monomer | | 25.00 | 25.00 | 25.00 |
| '9' | | LPO | Initiator | | 1.25 | 1.25 | 2.50 |
| | | | | | | | |
| Total wet dispersion | | | | 1000.00 | 1000.00 | 1000.00 | 1000.00 |
| | | | | | | | |
| Acrylic/DPGDA ratio [wt%] | | | | - | 90/10 | 90/10 | 90/10 |
| PVOH on total monomer [wt%] | | | | | 29.93 | 17.96 | 25.00 |
| Agitator speed [rpm] | | | | | 450 | 650 | 650 |
| Tg dispersed particles (DSC) [°C] | | | | | -38 | -38 | -38 |
| Dispersion processing result | | | | | Pass | Pass | Pass |
| D₅₀ average particle size [µm] | | | | <0.1 | 10.7 | 7.8 | 2.8 |
| Part size distribution (d90-d10)/d50 | | | | | 1.52 | 1.60 | 1.66 |

**Table 6b. Matting data polymeric blends**

| | Blend systems | Solids/solids blend ratio | Dry film Gloss [GU] (obtained from 50micron wet films on LENETA test charts) | | |
|---|---|---|---|---|---|
| | | [wt%] | 20° | 60° | 85° |
| Comp ExL | Comp Ex L | 100/0 | 68.3 | 86.3 | 98.1 |
| Ex 22 | Comp Ex L / Ex 19 | 90/10 | 4.7 | 23.3 | 37.9 |
| Ex 23 | Comp Ex L / Ex 19 | 70/30 | 0.3 | 3.5 | 6.4 |
| Ex 24 | Comp Ex L / Ex 19 | 50/50 | 0.2 | 2.3 | 4.1 |
| Ex 25 | Comp Ex L / Ex 19 | 0/100 | 0.1 | 0.3 | 3.5 |
| | | | | | |
| Ex 26 | Comp Ex L / Ex 20 | 90/10 | 4.1 | 21.4 | 41.4 |
| Ex 27 | Comp Ex L / Ex 20 | 70/30 | 0.4 | 4.0 | 5.5 |
| Ex 28 | Comp Ex L / Ex 20 | 50/50 | 0.3 | 2.8 | 3.4 |
| Ex 29 | Comp Ex L / Ex 20 | 0/100 | 0.1 | 0.4 | 3.8 |
| | | | | | |
| Ex 30 | Comp Ex L / Ex 21 | 90/10 | 5.0 | 30.8 | 80.4 |
| Ex 31 | Comp Ex L / Ex 21 | 70/30 | 0.7 | 7.4 | 46.5 |
| Ex 32 | Comp Ex L / Ex 21 | 50/50 | 0.8 | 8.5 | 42.9 |
| Ex 33 | Comp Ex L / Ex 21 | 0/100 | 0.1 | 0.8 | 22.7 |

Blends are prepared by adding the liquid PU binder of Comp Ex L to the liquid aqueous dispersion according the invention (Examples 19-21) and by agitating the mixture until a homogeneous blend is obtained. 50micron wet films of the liquid blends are accordingly casted onto LENETA 2C Opacity Charts and dried in 50°C ventilated oven for 15 minutes. Matting efficiency is determined by measuring gloss using a BYK-Gartner gloss analyser.
Fast drop in gloss can be realized by simple blending the high gloss Comp Ex L PU-binder together with the Ex 19, Ex 20 and Ex 21 matting dispersions. The low particle size PU binder formulation results obviously in a high gloss film. A steep decline in gloss level can be achieved by blending PU binder with large particle size matting dispersion according to the invention (Examples 22-29) . Furthermore particle size of matting dispersion determines the efficiency of matting which increases with particle size from 2.8µm to 7.8µm and 10.7µm. The max particle size is however restricted to maximum dry film thickness.

Preparation of example 19-21 with reference to table 6a is based on the previously described procedure for tables 1-5.

### Comparative Experiment M and Examples 34-48

**Table 7a. Data blends of soft clear coat binder with low Tg large particle size aqueous dispersion**

| Label | Raw materials | Purpose | High gloss Comp Ex M | Ex 34 | Ex 35 | Ex 36 |
|---|---|---|---|---|---|---|
| | NeoRez R-600 | PU Binder | 1000.00 | | | |
| '1' | DM | Solvent | | 691.64 | 703.84 | 685.00 |
| '2' | PVOH (HD=88%/Mw=160kDa) | Stabilizer | | 57.11 | 44.91 | 62.50 |
| '3' | BA | Monomer | | 225.00 | 225.00 | 225.00 |
| '4' | DPGDA | Monomer | | 25.00 | 25.00 | 25.00 |
| '5' | LPO | Initiator | | 1.25 | 1.25 | 2.50 |
| | | | ---------- | ---------- | ---------- | ---------- |
| Total wet dispersion | | | 1000.00 | 1000.00 | 1000.00 | 1000.00 |
| | | | | | | |
| Acrylic/DPGDA ratio [wt%] | | | ---------- | 90/10 | 90/10 | 90/10 |
| PVOH on total monomer [wt%] | | | | 22.80 | 14.97 | 11.97 |
| Agitator speed [rpm] | | | | 650 | 650 | 650 |
| Tg dispersed particles (DSC) [°C] | | | | -38 | -38 | -38 |
| Dispersion processing result | | | | Pass | Pass | Pass |
| D₅₀ average particle size [µm] | | | <0.05 | 2.7 | 6.5 | 8.4 |
| Part size distribution (d90-d10)/d50 | | | | 1.44 | 1.54 | 1.50 |

**Table 7b. Data blend binders Effect of blend with soft clear coat binder on matting & haptic performance**

| | Blend systems | Solids/solids blend ratio | Perceived feel dry coating | | | Dry film Gloss [GU] (obtained from 50micron wet films on LENETA test charts | | |
|---|---|---|---|---|---|---|---|---|
| | | [wt%] | Tackiness | Friction | Feel | 20° | 60° | 85° |
| Comp Ex M | Comp Ex M | 100/0 | Tacky | High | Tacky | 68.2 | 87.3 | 98.5 |
| Ex 37 | Comp Ex M / Ex 34 | 0/100 | Non tacky | Low | Peach | 0.1 | 1.1 | 26.8 |
| Ex 38 | Comp Ex M / Ex 34 | 10/90 | Non tacky | Low | Peach | 0.2 | 1.3 | 20.8 |
| Ex 39 | Comp Ex M / Ex 34 | 30/70 | Non tacky | Low/ moderate | Loss of feel | 0.3 | 2.1 | 24.5 |
| Ex 40 | Comp Ex M / Ex 34 | 50/50 | Non tacky | Moderate | Loss of feel | 0.3 | 3.0 | 24.0 |
| | | | | | | | | |
| Ex 41 | Comp Ex M / Ex 35 | 0/100 | Non tacky | Low | Peach | 0.1 | 0.5 | 6.2 |
| Ex 42 | Comp Ex M / Ex 35 | 90/10 | Non tacky | Low | Peach | 0.1 | 0.6 | 5.5 |
| Ex 43 | Comp Ex M / Ex 35 | 70/30 | Non tacky | Low | Peach | 0.2 | 0.9 | 5.4 |
| Ex 44 | Comp Ex M / Ex 35 | 50/50 | Non tacky | Low/moderate | SI loss of feel | 0.2 | 1.4 | 4.2 |
| | | | | | | | | |
| Ex 45 | Comp Ex M / Ex 26 | 0/100 | Non tacky | Low | Peach | 0.1 | 0.4 | 4.8 |
| Ex 46 | Comp Ex M / Ex 36 | 90/10 | Non tacky | Low | Peach | 0.2 | 0.5 | 4.9 |
| Ex 47 | Comp Ex M / Ex 36 | 70/30 | Non tacky | Low | Peach | 0.1 | 0.9 | 5.1 |
| Ex 48 | Comp Ex M / Ex 36 | 50/50 | Non tacky | Low | Peach | 0.2 | 1.4 | 3.5 |

Blends are prepared similar as described above. The matting effect shows similar trends, i.e. gloss reduces with an increasing average particle size of the inventive dispersion. Moreover with the inventive dispersion now being applied as the leading component of the final aqueous coating, both matting and haptic performance can be obtained. As described the effect of the tacky PU binder decreases with an increase of the average particle size of the inventive dispersion allowing higher and lower PU-binder/inventive dispersion blend ratios. This specific effect is thought to be related to the higher average particle size resulting in enriching of the specific surface topology.

Preparation of examples 34-36 with reference to table 7b is based on the previously described procedure for tables 1-5.

### Examples 49-50 and Comparative Experiments N-O

### Example 49 : Procedure for preparing suspension dispersion:

**Table 8**

| label | Ingredient | Amount (g) |
|---|---|---|
| '1' | DM | 883.81 |
| '2' | PVA (95wt% solid)* | 51.16 |
| '3' | MMA | 311.92 |
| '4' | LPO | 3.11 |
| | | --------- |
| | Total | 1250.00 |
| *PVA applied has 88% hydrolysis degree and 160 kDalton weight average mol weight | | |

Preparation of aqueous dispersion of Example 49 with reference to Table 8: Ingredients '1' and '2' are added to the reactor, equipped with nitrogen inlet, exhaust cooling and stirrer and heated to 90°C. Temperature is maintained for 60 minutes to fully dissolve '2'. Next content is cooled to room temperature.

Ingredients '3' and '4' are added to the monomer feed tank and mixed until '4' is fully dissolved in '3'. Accordingly monomer feed tank content is transferred to the reactor, the stirrer speed adjusted to 350rpm and reactor heated to 70°C. This temperature is maintained for 90 minutes. During this hold period temperature is controlled at 70±2°C by cooling/heating. After the hold period reactor content is heated to 90-95°C and maintained for 120 minutes. Next the reactor content is cooled to 25°C. The obtained dispersion has white appearance, pH (@25°C) of 5-6, and a D50 average particle size of 9.8 microns.

### Composition & specifications of Example 49

**Table 9**

| Matting dispersion | Ex 49 |
|---|---|
| Composition | p-MMA |
| Tg | 122°C |
| Solids | 27.8 |
| pH | 5-6 |
| Volume average diameter | 9.8µm |
| Gloss @20° Leneta test card | 0.1* |
| Gloss @60° Leneta test card | 0.8* |
| Gloss @60° Leneta test card | 3.0* |
| **Coating not film forming* | |

### Composition of Example 50

The composition is obtained by mixing the high gloss formulation of Comp Ex N with the matting dispersion of example 49 in an equivalent 94.5/5.5wt% binder s/s ratio to obtain the matted formulation.

| | Ingredient | Parts by Weight |
|---|---|---|
| 1 | High gloss Comp Ex N | 94.50 |
| 2 | Matt dispersion Ex 49 | 5.50 |

### Preparation & testing of composition of Example 50

Mix 1 and 2 together until a fully homogeneous blend is obtained. Cast film on test card and analyse gloss.

### Results

Gloss @20° = 14 GU; Gloss @60° = 38 GU; Gloss @85° = 56 GU

### Composition of comparative experiment N

The high gloss formulation (Comp Ex N) is based on the product obtainable from DSM under the trade mark NeoCryl^{®} XK-231,

| | Ingredient | Parts by Weight | Type of Material |
|---|---|---|---|
| 1 | XK-231 | 64.50 | Binder |
| 2 | Propylene glycol | 5.00 | Solvent |
| 3 | Demiwater | 1.70 | n.a. |
| 4 | Byk 028 | 0.20 | Defoamer |
| 5 | Disperbyk 190 | 1.90 | Wetting / dispersant |
| 6 | Sachtleben RDI-S | 22.20 | Pigment |
| 7 | Dehydran 1293 | 0.50 | Defoamer |
| 8 | Butyl diglycol | 2.00 | Solvent |
| 9 | Rheolate 278 | 2.00 | Rheology modifier |

### Preparation

Disperse 2 till 6 under Cowless dissolver until fineness < 10 micron. Add 2 till 6 to 1 while stirring. Add 7-9 in listed order whilst stirring well and proceed until a crater free film on glass is obtained.

### Results

pH: 7.8
Viscosity Brookfield 6 rpm (25°C): 6200 mPa.s
Viscosity Brookfield 60 rpm (25°C): 5000 mPa.s
Viscosity ICI C&P (25°C): 2,2 P
Specific gravity of formulation: 1.25 g/cm3
Gloss @20°: 63 GU
Gloss @60°: 83 GU
Gloss @85°: 94 GU
Pigment Volume Concentration (PVC): 19.2 %
Solids on weight: 50.8 %
VOC (EU): 96.8 g/l

### Composition of comparative experiment O

The satin gloss formulation Comp Ex O below is derived from Comp Ex N.

Sipernat 820A (an aluminated silica powder) is added to reduce gloss of the formulation below in a binder/matting agent s/s ratio of 94.5/5.5wt%.

| | Ingredient | Parts by Weight | Type of Material |
|---|---|---|---|
| 1 | NeoCryl XK-231 | 64.00 | Binder |
| 2 | Propylene glycol | 5.00 | Solvent |
| 3 | Demiwater | 1.00 | n.a. |
| 4 | Byk 028 | 0.20 | Defoamer |
| 5 | Disperbyk 2015 | 1.90 | Wetting / dispersant |
| 6 | Sipernat 820A | 1.50 | Matting agent |
| 7 | Kronos 2190 | 21.90 | Pigment |
| 8 | Dehydran 1293 | 0.50 | Defoamer |
| 9 | Butyl diglycol | 2.00 | Solvent |
| 10 | Rheolate 278 | 2.00 | Rheology modifier |

### Preparation

Disperse 2 till 7 under Cowless dissolver until fineness < 10 µm. Add 2 till 8 to 1 whilst stirring well and then 9 till 10 in listed order. The stirring is continued until a crater free film on glass is obtained.

### Results

pH: 7.9
Viscosity Brookfield 6 rpm (25°C): 3000 mPa.s
Viscosity Brookfield 60 rpm (25°C): 2550 mPa.s
Viscosity ICI C&P (25°C): 2.4 P
Specific gravity of formulation: 1.26 g/cm3
Gloss @20°: 7 GU
Gloss @60°: 35 GU
Gloss @85°: 58 GU
Pigment Volume Concentration (PVC): 19.7 %
Solids on weight: 51.8 %
VOC (EU): 98.0 g/l

### Total Gloss Overview

**Table 10**

| | Ex 49 | Ex 50 | Comp Ex N | Comp Ex O |
|---|---|---|---|---|
| Description | Matting dispersion | Matting dispersion blend with high gloss XK231 formulation | High gloss XK231 formulation | Sipernat formulated XK231 formulation |
| Gloss @20° | 0.1 | 14 | 63 | 7 |
| Gloss @60° | 0.8 | 38 | 83 | 35 |
| Gloss @85° | 3.0 | 56 | 94 | 58 |

### Coating properties of the example 50 and comparative experiments N and O

**Table 11**

| | Ex 50 | Comp Ex N | Comp Ex |
|---|---|---|---|
| Description | Matting dispersion blend with high gloss XK231 formulation | High gloss XK231 formulation | Sipernat formulated XK231 formulation |
| Dry rub resistance according Satra | | | |
| Before, gloss 20°/60°/85° in GU | 14/ 38* / 56 | 63 / 83* / 94 | 7 / 35* / 58 |
| After 1000 dry rubs, gloss 20°/60°/85° | 7 / 35* / 62 | 21 / 58* / 86 | 17 / 55* / 57 |
| Early water resistance | | | |
| 15 min | 5 | 4 | 3 |
| 240 min | 3 | 2 | 2 |
| Chemical resistance | | | |
| Water (16 Hrs) | 5 | 5 | 5 |
| Ethanol 48% (16 Hrs) | 3 | 2 | 2 |
| Lux (16 Hrs) | 5 | 5 | 5 |
| Andy (16 Hrs) | 5 | 5 | 1, soft |
| Early blocking | | | |
| 4 hrs 1 kg/cm² at 50°C | 4-5 | 4-5 | 5 |
| Water absorption (%) | 9 | 9 | 10 |
| Key: 5 = excellent; 1 = poor | | | |
| *For commercial application the most relevant gloss angle | | | |

### Conclusion:

It can be observed that a significant reduction in gloss value can be obtained for Ex 49 compared to high gloss Comp Ex N and in line with silica matted Comp Ex O. This is achieved by adding the acrylic suspension matting dispersion Ex49 to a glossy formulation (Comp Ex N). Further other relevant coating properties like chemical resistance and blocking resistance remain on the same level as for the high gloss Comp Ex N; and are on the same level as for the silica matted Comp Ex O or are even improved. Further, the dry rub resistance of aqueous coating compositions according to the invention (Ex 50) is even better than for the silica matted Comp Ex O.

## Claims

1. An aqueous dispersion obtained by suspension polymerisation of vinyl monomers in the presence of an oil-soluble organic initiator and a partially hydrolysed vinyl acetate (co)polymer, comprising
(i) dispersed particles of vinyl polymer having a volume average particle size diameter (D50) of from 1 to 30 µm (microns) and a particle size distribution of at most 2;
(ii) a partially hydrolysed vinyl acetate (co)polymer in an amount of from 2% to 30% by weight, relative to the total amount of monomers used to prepare the vinyl polymer(s) of the dispersed polymeric particles; and
(iii) decomposition products of the oil-soluble organic initiator,
wherein at least 95 wt.% of the partially hydrolysed vinyl acetate (co)polymer that is present in the aqueous dispersion has a weight average molecular weight M_{w} from 25 to 500 kDalton and a hydrolysis degree of from 70 to 95 mol%, and
wherein the oil-soluble initiator has a water solubility of at most 1 g per I water at 20°C and wherein the oil-soluble organic initiator is di-lauroyl peroxide.

2. An aqueous dispersion as claimed in claim 1, wherein the amount of partially hydrolysed vinyl acetate (co)polymer is from 5% to 25% by weight, preferably from 10% to 25% by weight, relative to the total amount of monomers used to prepare the vinyl polymer(s) of the dispersed polymeric particles.

3. An aqueous dispersion as claimed in any preceding claim, wherein the partially hydrolysed vinyl acetate (co)polymer is partially hydrolysed polyvinyl acetate, partially hydrolysed ethylene vinyl acetate or a mixture thereof, preferably the partially hydrolysed vinyl acetate (co)polymer is partially hydrolysed polyvinyl acetate.

4. An aqueous dispersion as claimed in any of claims 1-3, wherein the partially hydrolysed vinyl acetate (co)polymer is partially hydrolysed polyvinyl acetate having a hydrolysis degree of from 70 to 90 mol% and a weight average molecular weight M_{w} of at least 50 kDalton, preferably at least 150 kDalton.

5. An aqueous dispersion as claimed in any of claims 1-3, wherein the partially hydrolysed vinyl acetate (co)polymer is partially hydrolysed ethylene vinyl acetate having a hydrolysis degree from 90 to 95 mol% and a weight average molecular weight M_{w} of at least 25 kDalton.

6. An aqueous dispersion as claimed in any preceding claim, wherein the dispersed vinyl polymer particles have a volume average particle size diameter (D50) of from 2 to 20 µm, more preferably from 5 to 15 µm.

7. An aqueous dispersion as claimed in claim 5, wherein the dispersed vinyl polymer particles have a volume average particle size diameter (D50) of from 1 to 10 µm, more preferably from 1 to 5 µm.

8. An aqueous dispersion as claimed in any preceding claim, wherein the glass transition temperature T_{g} of the vinyl polymer is at most 50 ⁰C, preferably at most 0⁰C, more preferably at most -20 ⁰C and preferably higher than -65⁰C, more preferably higher than -60⁰C, whereby the glass transition temperature is measured using Differential Scanning Calorimetry.

9. An aqueous dispersion as claimed in any preceding claim, wherein the dispersed vinyl polymer particles are crosslinked.

10. An aqueous dispersion as claimed in any preceding claim, wherein the vinyl polymer comprises
a) from 0 to 10 wt.%, more preferably from 0 to 3 wt.%, most preferably 0 wt.% of potentially ionic mono-unsaturated ethylenically unsaturated monomers;
b) from 0 to 10 wt.%, more preferably from 0 to 5 wt.%, most preferably from 0 to 3 wt.% of mono-unsaturated ethylenically unsaturated monomers with a functional group for crosslinking other than a);
c) from 60 to 100 wt.%, preferably from 72 to 100 wt.%, most preferably from 77 to 100 wt.% of mono-unsaturated ethylenically unsaturated monomers other than a) and b);
d) from 0 to 20 wt% of polyunsaturated ethylenically unsaturated monomer wherein the sum of a) to d) is 100 wt.% and the amounts of a) to d) is given relative to the total weight amount of the monomers to prepare the vinyl polymer.

11. An aqueous dispersion as claimed in claim 10, where the ethylenically unsaturated monomers c) are selected from the group consisting of acrylonitrile, acrylates, methacrylates, itaconates, acrylamides, arylalkylenes and any mixture thereof, preferably the ethylenically unsaturated monomer c) contains at least one C₁₋₈ alkyl (meth)acrylate.

12. An aqueous dispersion as claimed in any preceding claim, wherein the aqueous dispersion is free of non-aqueous solvent and the aqueous dispersion is free of water-soluble initiator.

13. An aqueous dispersion as claimed in any preceding claim, wherein the density of the dispersed vinyl polymeric particles is in the range from 0.95 to 1.10 g/ml.

14. A process of suspension polymerisation for preparing the aqueous dispersion as claimed in any of claims 1- 13, the process comprising the steps of:
i) dissolving the partially hydrolysed vinyl acetate (co)polymer as claimed in any of claims 1- 11 in an amount as claimed in any of claims 1- 13 in water to obtain an aqueous solution of the vinyl alcohol (co)polymer;
ii) mixing the vinyl monomer(s) with the oil-soluble organic initiator to obtain a solution, wherein an oil-soluble initiator has a water solubility of at most 1 g per l water at 20°C and wherein the oil-soluble organic initiator is di-lauroyl peroxide;
iii) mixing the aqueous solution of the partially hydrolysed vinyl acetate (co)polymer obtained in i) with the solution obtained in step ii) at a shear rate resulting from an agitator speed of less than 1000 rpm (preferably less than 750 rpm);
iv) increasing the temperature of the mixture to from 25 to 95 °C under atmospheric pressure until polymerisation is substantially completed.

15. Use of the aqueous dispersion according to any of claims 1-13 as matting agent in aqueous coating composition comprising a latex polymer.

16. Use of the aqueous dispersion according to claim 8 or claims 9-13 (when dependent on claim 8) to obtain a matt coat with haptic properties when applied to a substrate or as haptic agent in aqueous coating composition comprising a latex polymer.

17. An aqueous coating composition comprising a blend of at least an aqueous first dispersion of dispersed particles of vinyl polymer (first polymer) as claimed in any of claims 1-13 (Dispersion A) and an aqueous second dispersion (Dispersion B) which Dispersion B comprises dispersed polymeric particles of a latex polymer (second polymer).

18. An aqueous coating composition according to claim 17, where the particles of the second polymer (Dispersion B) has a volume average particle size diameter (D50) of less than 1 µm (micron) and preferably where at least 90% of the particles by weight of the total amount of the particles of the second polymer has a size less than 500 nm (nanometers), preferably less than 200 nm, more preferably less than 150 nm.

19. An aqueous coating composition as claimed in claim 17 or 18, where the second polymer is a vinyl polymer, a polyurethane, an alkyd polymer, any combination thereof or any mixture thereof.

20. An aqueous coating composition according to any one of claims 17 to 19, wherein the Dispersion B forms a film having high gloss (> 60 gloss units at 60 degrees) and (i) where the weight ratio -calculated on solid polymers- of the first polymer to the second polymer is from 1/99 to 30 / 70 (preferred 5/95 to 15/85) ; and (ii) where the aqueous coating composition forms a matt (in particular < 40 gloss units at 60 degrees) coat when applied to a substrate.

21. An aqueous coating composition according to claim 17 or 18, where the second polymer is a polyurethane, where the weight ratio -calculated on solid polymers- of the first polymer to the second polymer is from 10/90 to 50 /50, and where the aqueous coating composition further comprises a second latex polymer (third polymer) in an amount from 0 to 30 wt.% (relative to the total amount of first, second and third polymer).

22. Use of the aqueous coating composition according to any one of claims 17 to 21 to obtain a matt coating.

23. Use of the aqueous coating composition according to any one of claims 17 to 21 and comprising an aqueous dispersion according to claim 8 or claims 9-13 (when dependent on claim 8) to obtain a coating having improved haptic properties.

24. A coating obtained by (i) applying to a substrate an aqueous coating composition according to any one of claims 17 to 21 and (ii) drying the aqueous coating composition to obtain a matt coating, wherein the substrate is leather, artificial leather, paper, foil, cardboard, wood, metal, concrete, fibres, tissues, plastic, (laminating) films.

25. A solid particulate composition obtained by spray and/or freeze drying an aqueous composition as claimed in any of claims 1-13 or 17-21.

26. Use of an aqueous composition as claimed in any of claims 1-13 or 17-21 and/or a solid particulate composition as claimed in claim 25 for a purpose selected from the group consisting of: biomedical, personal care, inks and/or coatings.

## Patentansprüche

1. Wässrige Dispersion, erhalten durch Suspensionspolymerisation von Vinylmonomeren in Gegenwart des öllöslichen organischen Initiators und eines teilweise hydrolysierten Vinylacetat(co)polymers, umfassend:
(i) dispergierte Partikel von Vinylpolymer mit einem volumengemittelten Partikelgrößendurchmesser (D50) von 1 bis 30 µm (Mikrometer) und einer Partikelgrößenverteilung von höchstens 2;
(ii) ein teilweise hydrolysiertes Vinylacetat-(co)polymer in einer Menge von 2 Gew.% bis 30 Gew.%, bezogen auf die Gesamtmenge an Monomeren, die zur Herstellung des Vinylpolymers/der Vinylpolymere der dispergierten polymeren Partikel verwendet werden; und
(iii) Zersetzungsprodukte des öllöslichen organischen Initiators;
wobei mindestens 95 Gew.% des teilweise hydrolysierten Vinylacetat(co)polymers, das in der wässrigen Dispersion vorhanden ist, ein gewichtsgemitteltes Molekulargewicht M_{w} von 25 bis 500 kDalton und einen Hydrolysegrad von 70 bis 95 Mol.% aufweisen, und
wobei der öllösliche Initiator eine Wasserlöslichkeit von höchstens 1 g pro Liter Wasser bei 20 °C aufweist und wobei der öllösliche organische Initiator Dilauroylperoxid ist.

2. Wässrige Dispersion nach Anspruch 1, wobei die Menge an teilweise hydrolysiertem Vinylacetat(co)-polymer 5 Gew.% bis 25 Gew.%, vorzugsweise 10 Gew.% bis 25 Gew.% beträgt, bezogen auf die Gesamtmenge der Monomere, die zur Herstellung des Vinylpolymers/der Vinylpolymere der dispergierten polymeren Partikel verwendet werden.

3. Wässrige Dispersion nach einem der vorhergehenden Ansprüche, wobei das teilweise hydrolysierte Vinylacetat(co)polymer teilweise hydrolysiertes Polyvinylacetat, teilweise hydrolysiertes EthylenVinylacetat oder eine Mischung davon ist, wobei vorzugsweise das teilweise hydrolysierte Vinylacetat(co)polymer teilweise hydrolysiertes Polyvinylacetat ist.

4. Wässrige Dispersion nach einem der Ansprüche 1 bis 3, wobei das teilweise hydrolysierte Vinylacetat-(co)polymer teilweise hydrolysiertes Polyvinylacetat mit einem Hydrolysegrad von 70 bis 90 Mol.% und einem gewichtsgemittelten Molekulargewicht M_{w} von mindestens 50 kDalton, vorzugsweise mindestens 150 kDalton, ist.

5. Wässrige Dispersion nach einem der Ansprüche 1 bis 3, wobei das teilweise hydrolysierte Vinylacetat-(co)polymer teilweise hydrolysiertes Ethylen-Vinylacetat mit einem Hydrolysegrad von 90 bis 95 Mol.% und einem gewichtsgemittelten Molekulargewicht M_{w} von mindestens 25 kDalton ist.

6. Wässrige Dispersion nach einem der vorhergehenden Ansprüche, wobei die dispergierten Vinylpolymerpartikel einen volumengemittelten Partikelgrößendurchmesser (D50) von 2 bis 20 µm, bevorzugter 5 bis 15 µm aufweisen.

7. Wässrige Dispersion nach Anspruch 5, wobei die dispergierten Vinylpolymerpartikel einen volumengemittelten Partikelgrößendurchmesser (D50) von 1 bis 10 µm, bevorzugter 1 bis 5 µm aufweisen.

8. Wässrige Dispersion nach einem der vorhergehenden Ansprüche, wobei die Glasübergangstemperatur T_{g} des Vinylpolymers höchstens 50 °C, vorzugsweise höchstens 0 °C, bevorzugter höchstens -20 °C und vorzugsweise höher als -65 °C, bevorzugter höher als -60 °C ist, wobei die Glasübergangstemperatur mittels Differential-Scanning-Kalorimetrie gemessen wird.

9. Wässrige Dispersion nach einem der vorhergehenden Ansprüche, wobei die dispergierten Vinylpolymerpartikel vernetzt sind.

10. Wässrige Dispersion nach einem der vorhergehenden Ansprüche, wobei das Vinylpolymer umfasst:
a) 0 bis 10 Gew.%, bevorzugter 0 bis 3 Gew.%, am meisten bevorzugt 0 Gew.% von potentiell ionischen, einfach ungesättigten, ethylenisch ungesättigten Monomeren;
b) 0 bis 10 Gew.%, bevorzugter 0 bis 5 Gew.%, am meisten bevorzugt 0 bis 3 Gew.% von einfach ungesättigten, ethylenisch ungesättigten Monomeren mit einer funktionellen Gruppe zur Vernetzung, die von a) verschieden ist;
c) 60 bis 100 Gew.%, bevorzugt 72 bis 100 Gew.%, am meisten bevorzugt 77 bis 100 Gew.% von einfach ungesättigten, ethylenisch ungesättigten Monomeren, die von a) und b) verschieden sind;
d) 0 bis 20 Gew.% von mehrfach ungesättigtem, ethylenisch ungesättigtem Monomer,
wobei die Summe von a) bis d) 100 Gew.% beträgt und die Mengen von a) bis d) relativ zu der Gesamtgewichtmenge der Monomere zur Herstellung des Vinylpolymers angegeben sind.

11. Wässrige Dispersion nach Anspruch 10, wobei die ethylenisch ungesättigten Monomere c) ausgewählt sind aus der Gruppe bestehend aus Acrylnitril, Acrylaten, Methacrylaten, Itaconaten, Acrylamiden, Arylalkylenen und jeglicher Mischung davon, wobei vorzugsweise das ethylenisch ungesättigte Monomer c) mindestens ein C₁₋₈-Alkyl(meth)acrylat enthält.

12. Wässrige Dispersion nach einem der vorhergehenden Ansprüche, wobei die wässrige Dispersion frei von nicht-wässrigem Lösungsmittel ist und die wässrige Dispersion frei von wasserlöslichem Initiator ist.

13. Wässrige Dispersion nach einem der vorhergehenden Ansprüche, wobei die Dichte der dispergierten Vinylpolymerpartikel im Bereich von 0,95 bis 1,10 g/ml liegt.

14. Verfahren zur Suspensionspolymerisation zur Herstellung der wässrigen Dispersion nach einem der Ansprüche 1 bis 13, wobei das Verfahren die Schritte umfasst:
i) Lösen des teilweise hydrolysierten Vinylacetat-(co)polymers nach einem der Ansprüche 1 bis 11 in einer Menge wie in einem der Ansprüche 1 bis 13 beansprucht in Wasser, um eine wässrige Lösung des Vinylalkohol(co)polymers zu erhalten;
ii) Mischen des Vinylmonomers/der Vinylmonomere mit dem öllöslichen organischen Initiator, um eine Lösung zu erhalten, wobei ein öllöslicher Initiator eine Wasserlöslichkeit von höchstens 1 g pro Liter Wasser bei 20 °C aufweist und wobei der öllösliche organische Initiator Dilauroylperoxid ist;
iii) Mischen der wässrigen Lösung des teilweise hydrolysierten Vinylacetat(co)polymers, das in i) erhalten wurde, mit der Lösung, die in Schritt ii) erhalten wurde, mit einer Scherrate, die aus einer Rührwerkgeschwindigkeit von weniger als 1000 UpM (vorzugsweise weniger als 750 UpM) resultiert;
iv) Erhöhen der Temperatur der Mischung auf 25 bis 95 °C unter atmosphärischem Druck, bis die Polymerisation im Wesentlichen abgeschlossen ist.

15. Verwendung der wässrigen Dispersion nach einem der Ansprüche 1 bis 13 als Mattierungsmittel in wässriger Beschichtungszusammensetzung, die ein Latexpolymer umfasst.

16. Verwendung der wässrigen Dispersion nach Anspruch 8 oder den Ansprüchen 9 bis 13 (in Abhängigkeit von Anspruch 8) zum Erhalten einer matten Beschichtung mit haptischen Eigenschaften, wenn Auftragung auf ein Substrat erfolgt, oder als haptisches Mittel in wässriger Beschichtungszusammensetzung, die ein Latexpolymer umfasst.

17. Wässrige Beschichtungszusammensetzung, umfassend ein Gemisch aus mindestens einer wässrigen ersten Dispersion von dispergierten Partikeln von Vinylpolymer (erstem Polymer) gemäß einem der Ansprüche 1 bis 13 (Dispersion A) und einer wässrigen zweiten Dispersion (Dispersion B), wobei Dispersion B dispergierte polymere Partikel eines Latexpolymers (zweiten Polymers) umfasst.

18. Wässrige Beschichtungszusammensetzung nach Anspruch 17, wobei die Partikel des zweiten Polymers (Dispersion B) einen volumengemittelten Partikelgrößendurchmesser (D50) von weniger als 1 µm (Mikrometer) haben, und wobei vorzugsweise mindestens 90 Gew.% der Partikel, bezogen auf die Gesamtmenge der Partikel des zweiten Polymers, eine Größe von weniger als 500 nm (Nanometer), vorzugsweise weniger als 200 nm, bevorzugter weniger als 150 nm haben.

19. Wässrige Beschichtungszusammensetzung nach Anspruch 17 oder 18, wobei das zweite Polymer ein Vinylpolymer, ein Polyurethan, ein Alkydpolymer, jegliche Kombination davon oder jegliche Mischung davon ist.

20. Wässrige Beschichtungszusammensetzung nach einem der Ansprüche 17 bis 19, wobei die Dispersion B einen Film mit hohem Glanz bildet (> 60 Glanzeinheiten bei 60 Grad), und (i) wobei das Gewichtsverhältnis, berechnet basierend auf festen Polymeren, von dem ersten Polymer zu dem zweiten Polymer 1/99 bis 30/70 (vorzugsweise 5/95 bis 15/85) beträgt; und (ii) wobei die wässrige Beschichtungszusammensetzung eine matte Schicht bildet (insbesondere < 40 Glanzeinheiten bei 60 Grad), wenn Auftragung auf ein Substrat erfolgt.

21. Wässrige Beschichtungszusammensetzung nach Anspruch 17 oder 18, wobei das zweite Polymer ein Polyurethan ist, wobei das Gewichtsverhältnis, berechnet basierend auf festen Polymeren, von dem ersten Polymer zu dem zweiten Polymer 10/90 bis 50/50 beträgt, und wobei die wässrige Beschichtungszusammensetzung des Weiteren ein zweites Latexpolymer (drittes Polymer) in einer Menge von 0 bis 30 Gew.% (bezogen auf die Gesamtmenge des ersten, zweiten und dritten Polymers) umfasst.

22. Verwendung der wässrigen Beschichtungszusammensetzung nach einem der Ansprüche 17 bis 21, um eine matte Beschichtung zu erhalten.

23. Verwendung der wässrigen Beschichtungszusammensetzung nach einem der Ansprüche 17 bis 21 und umfassend eine wässrige Dispersion gemäß Anspruch 8 oder den Ansprüchen 9 bis 13 (in Abhängigkeit von Anspruch 8) zum Erhalten einer Beschichtung mit verbesserten haptischen Eigenschaften.

24. Beschichtung, die erhalten wird durch (i) Auftragen einer wässrigen Beschichtungszusammensetzung gemäß einem der Ansprüche 17 bis 21 auf ein Substrat und (ii) Trocknen der wässrigen Beschichtungszusammensetzung, um eine matte Beschichtung zu erhalten, wobei das Substrat Leder, Kunstleder, Papier, Folie, Karton, Holz, Metall, Beton, Fasern, Gewebe, Kunststoff, (Laminier)filme ist.

25. Feste Partikelzusammensetzung, die durch Sprühtrocknen und/oder Gefriertrocknen einer wässrigen Zusammensetzung gemäß einem der Ansprüche 1 bis 13 oder 17 bis 21 erhalten wird.

26. Verwendung einer wässrigen Zusammensetzung nach einem der Ansprüche 1 bis 13 oder 17 bis 21 und/oder einer festen Partikelzusammensetzung nach Anspruch 25 zu einem Zweck ausgewählt aus der Gruppe bestehend aus: Biomedizin, Körperpflege, Tinten und/oder Beschichtungen.

## Revendications

1. Dispersion aqueuse obtenue par polymérisation en suspension de monomères vinyliques en la présence d'un amorceur organique liposoluble et d'un (co)polymère d'acétate de vinyle partiellement hydrolysé, comprenant
(i) des particules de polymère vinylique dispersées ayant un diamètre moyen de taille de particule en volume (D50) allant de 1 à 30 µm (microns) et une distribution de tailles de particules d'au plus 2 ;
(ii) un (co)polymère d'acétate de vinyle partiellement hydrolysé en une quantité allant de 2 % à 30 % en poids, par rapport à la quantité totale de monomères utilisée pour préparer le(s) polymère(s) vinylique(s) des particules polymériques dispersées ; et
(iii) des produits de décomposition de l'amorceur organique liposoluble ;
dans laquelle au moins 95 % en poids du (co)polymère d'acétate de vinyle partiellement hydrolysé qui est présent dans la dispersion aqueuse a un poids moléculaire moyen en poids M_{w} de 25 à 500 kDalton et un degré d'hydrolyse allant de 70 à 95 % en moles, et
dans laquelle l'amorceur liposoluble a une solubilité dans l'eau d'au plus 1 g par l d'eau à 20 °C et dans laquelle l'amorceur organique liposoluble est le peroxyde de dilauroyle.

2. Dispersion aqueuse selon la revendication 1, dans laquelle la quantité de (co)polymère d'acétate de vinyle partiellement hydrolysé est de 5 % à 25 % en poids, de préférence de 10 % à 25 % en poids, par rapport à la quantité totale de monomères utilisée pour préparer le(s) polymère(s) vinylique(s) des particules polymériques dispersées.

3. Dispersion aqueuse selon l'une quelconque des revendications précédentes, dans laquelle le (co)polymère d'acétate de vinyle partiellement hydrolysé est un poly(acétate de vinyle) partiellement hydrolysé, un éthylène-acétate de vinyle partiellement hydrolysé ou un mélange de ceux-ci, de préférence le (co)polymère d'acétate de vinyle partiellement hydrolysé est un poly(acétate de vinyle) partiellement hydrolysé.

4. Dispersion aqueuse selon l'une quelconque des revendications 1 à 3, dans laquelle le (co)polymère d'acétate de vinyle partiellement hydrolysé est un poly(acétate de vinyle) partiellement hydrolysé ayant un degré d'hydrolyse allant de 70 à 90 % en moles et un poids moléculaire moyen en poids M_{w} d'au moins 50 kDalton, de préférence au moins 150 kDalton.

5. Dispersion aqueuse selon l'une quelconque des revendications 1 à 3, dans laquelle le (co)polymère d'acétate de vinyle partiellement hydrolysé est un éthylène-acétate de vinyle partiellement hydrolysé ayant un degré d'hydrolyse de 90 à 95 % en moles et un poids moléculaire moyen en poids M_{w} d'au moins 25 kDalton.

6. Dispersion aqueuse selon l'une quelconque des revendications précédentes, dans laquelle les particules de polymère vinylique dispersées ont un diamètre moyen de taille de particule en volume (D50) allant de 2 à 20 µm, plus préférablement de 5 à 15 µm.

7. Dispersion aqueuse selon la revendication 5, dans laquelle les particules de polymère vinylique dispersées ont un diamètre moyen de taille de particule en volume (D50) allant de 1 à 10 µm, plus préférablement de 1 à 5 µm.

8. Dispersion aqueuse selon l'une quelconque des revendications précédentes, dans laquelle la température de transition vitreuse T_{g} du polymère vinylique est d'au plus 50 °C, de préférence d'au plus 0 °C, plus préférablement d'au plus -20 °C et de préférence supérieure à -65 °C, plus préférablement supérieure à - 60 °C, la température de transition vitreuse étant mesurée par calorimétrie différentielle à balayage.

9. Dispersion aqueuse selon l'une quelconque des revendications précédentes, dans laquelle les particules de polymère vinylique dispersées sont réticulées.

10. Dispersion aqueuse selon l'une quelconque des revendications précédentes, dans laquelle le polymère vinylique comprend
a) de 0 à 10 % en poids, plus préférablement de 0 à 3 % en poids, de manière préférée entre toutes 0 % en poids de monomères éthyléniquement insaturés mono-insaturés potentiellement ioniques ;
b) de 0 à 10 % en poids, plus préférablement de 0 à 5 % en poids, de manière préférée entre toutes de 0 à 3 % en poids de monomères éthyléniquement insaturés mono-insaturés avec un groupe fonctionnel pour la réticulation autre que a) ;
c) de 60 à 100 % en poids, de préférence de 72 à 100 % en poids, de manière préférée entre toutes de 77 à 100 % en poids de monomères éthyléniquement insaturés mono-insaturés autres que a) et b) ;
d) de 0 à 20 % en poids de monomère éthyléniquement insaturé polyinsaturé, dans laquelle la somme de a) à d) est 100 % en poids et les quantités de a) à d) sont exprimées par rapport à la quantité totale en poids des monomères pour préparer le polymère vinylique.

11. Dispersion aqueuse selon la revendication 10, où les monomères éthyléniquement insaturés c) sont choisis dans le groupe constitué par l'acrylonitrile, des acrylates, des méthacrylates, des itaconates, des acrylamides, des arylalkylènes et un mélange quelconque de ceux-ci, de préférence le monomère éthyléniquement insaturé c) contient au moins un (méth)acrylate d'alkyle en C₁₋₈.

12. Dispersion aqueuse selon l'une quelconque des revendications précédentes, la dispersion aqueuse étant exempte de solvant non aqueux et la dispersion aqueuse étant exempte d'amorceur hydrosoluble.

13. Dispersion aqueuse selon l'une quelconque des revendications précédentes, dans laquelle la densité des particules polymériques vinyliques dispersées est dans la plage de 0,95 à 1,10 g/ml.

14. Procédé de polymérisation en suspension pour préparer la dispersion aqueuse selon l'une quelconque des revendications 1 à 13, le procédé comprenant les étapes de :
i) dissolution du (co)polymère d'acétate de vinyle partiellement hydrolysé selon l'une quelconque des revendications 1 à 11 en une quantité selon l'une quelconque des revendications 1 à 13 dans de l'eau pour obtenir une solution aqueuse du (co)polymère d'alcool vinylique ;
ii) mélange du ou des monomère(s) vinylique(s) avec l'amorceur organique liposoluble pour obtenir une solution, un amorceur liposoluble ayant une solubilité dans l'eau d'au plus 1 g par l d'eau à 20 °C et dans lequel l'amorceur organique liposoluble est le peroxyde de dilauroyle ;
iii) mélange de la solution aqueuse du (co)polymère d'acétate de vinyle partiellement hydrolysé obtenue en i) avec la solution obtenue à l'étape ii) à un taux de cisaillement résultant d'une vitesse d'agitateur inférieure à 1000 tpm (de préférence inférieure à 750 tpm) ;
iv) augmentation de la température du mélange jusqu'à de 25 à 95 °C sous pression atmosphérique jusqu'à ce que la polymérisation soit sensiblement terminée.

15. Utilisation de la dispersion aqueuse selon l'une quelconque des revendications 1 à 13 en tant qu'agent matifiant dans une composition de revêtement aqueuse comprenant un polymère de latex.

16. Utilisation de la dispersion aqueuse selon la revendication 8 ou les revendications 9 à 13 (lorsqu'elle est dépendante de la revendication 8) pour obtenir un revêtement mat ayant des propriétés haptiques lorsqu'elle est appliquée sur un substrat ou en tant qu'agent haptique dans une composition de revêtement aqueuse comprenant un polymère de latex.

17. Composition de revêtement aqueuse comprenant un mélange d'au moins une première dispersion aqueuse de particules de polymère vinylique (premier polymère) dispersées selon l'une quelconque des revendications 1 à 13 (dispersion A) et d'une deuxième dispersion aqueuse (dispersion B), laquelle dispersion B comprend des particules polymériques dispersées d'un polymère de latex (deuxième polymère).

18. Composition de revêtement aqueuse selon la revendication 17, où les particules du deuxième polymère (dispersion B) ont un diamètre moyen de taille de particule en volume (D50) inférieur à 1 µm (micron) et de préférence où au moins 90 % des particules en poids de la quantité totale des particules du deuxième polymère ont une taille inférieure à 500 nm (nanomètres), de préférence inférieure à 200 nm, plus préférablement inférieure à 150 nm.

19. Composition de revêtement aqueuse selon la revendication 17 ou 18, où le deuxième polymère est un polymère vinylique, un polyuréthane, un polymère d'alkyde, une combinaison quelconque de ceux-ci ou un mélange quelconque de ceux-ci.

20. Composition de revêtement aqueuse selon l'une quelconque des revendications 17 à 19, dans laquelle la dispersion B forme un film ayant un brillant élevé (> 60 unités de brillant à 60 degrés) et (i) où le rapport en poids, calculé sur des polymères solides, du premier polymère sur le deuxième polymère est de 1/99 à 30/70 (de préférence 5/95 à 15/85) ; et (ii) où la composition de revêtement aqueuse forme un revêtement mat (en particulier < 40 unités de brillant à 60 degrés) lorsqu'elle est appliquée sur un substrat.

21. Composition de revêtement aqueuse selon la revendication 17 ou 18, où le deuxième polymère est un polyuréthane, où le rapport en poids, calculé sur des polymères solides, du premier polymère sur le deuxième polymère est de 10/90 à 50/50, et où la composition de revêtement aqueuse comprend en outre un deuxième polymère de latex (troisième polymère) en une quantité de 0 à 30 % en poids (par rapport à la quantité totale des premier, deuxième et troisième polymères).

22. Utilisation de la composition de revêtement aqueuse selon l'une quelconque des revendications 17 à 21 pour obtenir un revêtement mat.

23. Utilisation de la composition de revêtement aqueuse selon l'une quelconque des revendications 17 à 21 et comprenant une dispersion aqueuse selon la revendication 8 ou les revendications 9 à 13 (lorsqu'elle est dépendante de la revendication 8) pour obtenir un revêtement ayant des propriétés haptiques améliorées.

24. Revêtement obtenu par (i) application sur un substrat d'une composition de revêtement aqueuse selon l'une quelconque des revendications 17 à 21 et (ii) séchage de la composition de revêtement aqueuse pour obtenir un revêtement mat, dans lequel le substrat est du cuir, du cuir artificiel, du papier, une feuille, du carton, du bois, du métal, du béton, des fibres, des mouchoirs, une matière plastique, des films (de stratification).

25. Composition particulaire solide obtenue par pulvérisation et/ou lyophilisation d'une composition aqueuse selon l'une quelconque des revendications 1 à 13 ou 17 à 21.

26. Utilisation d'une composition aqueuse selon l'une quelconque des revendications 1 à 13 ou 17 à 21 et/ou d'une composition particulaire solide selon la revendication 25 pour une application choisie dans le groupe constitué par : biomédical, soins personnels, encres et/ou revêtements.
